# EUROPEAN PATENT APPLICATION

(11) **EP 4 808 201 A1**
(43) Date of publication of application: **16.09.2026**
(21) Application number: 24890089.6
(22) Date of filing: 14.06.2024
(51) Int. Cl.: H04W 28/06

(54) **INFORMATION TRANSMITTING METHOD, INFORMATION RECEIVING METHOD, COMMUNICATION APPARATUSES AND STORAGE MEDIUM**

(30) Priority: 15.11.2023 CN 202311524948
(71) Applicant: ZTE Corporation, Shenzhen, Guangdong 518057 (CN)
(72) Inventor: YANG, Xiaoling, Shenzhen, Guangdong 518057 (CN); DAI, Bo, Shenzhen, Guangdong 518057 (CN); LIANG, Chulong, Shenzhen, Guangdong 518057 (CN); XU, Jin, Shenzhen, Guangdong 518057 (CN); YU, Guanghui, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099381
(87) International publication number: WO 2025/102720

(57) **Abstract**

Provided in the embodiments of the present disclosure are an information transmitting method, an information receiving method, communication apparatuses, and a storage medium. The information transmitting method comprises: on the basis of an information sequence, generating a first signal consisting of high-level pulses and low-level pulses; and sending the first signal.

## Description

The present disclosure claims priority to the Chinese Patent Application No. 202311524948.2, filed on November 15, 2023, the entire content of which is incorporated herein by reference.

### TECHNICAL FIELD

The present disclosure relates to the technical field of communications, and in particular, to an information transmission method and an information receiving method, a communication apparatus, and a storage medium.

### BACKGROUND

The internet of things (IoT) is an aggregative application and technology enhancement, and may connect any object to a network through an information sensing device according to an agreed protocol. The object may perform information exchange and communication via an information transmission medium, to implement functions such as intelligent identification, positioning, tracking, and monitoring. In particular, to satisfy technical requirements such as low cost, low power consumption, and energy saving and carbon reduction, the passive internet of things (Passive-IoT) has also received widespread attention. The passive internet of things is a new type of internet of things technology, which may utilize an energy source existing in the environment, such as electromagnetic waves or light energy, to provide power for the internet of things, thereby reducing the energy consumption of the device, extending its service life, and simultaneously reducing the dependence on traditional energy sources. The passive internet of things may also better adapt to various environments and application scenarios, and has a very wide application range, including smart home, smart city, smart healthcare, smart transportation, etc.

### SUMMARY

In a first aspect, the present disclosure provides an information transmission method, and the information transmission method includes: generating a first signal formed by a high-level pulse and a low-level pulse based on an information sequence; and sending the first signal.

In a second aspect, the present disclosure provides an information receiving method, and the information receiving method includes: receiving a first signal formed by a high-level pulse and a low-level pulse; and performing energy charging and acquiring an information sequence based on the first signal.

In a third aspect, the present disclosure provides a communication apparatus, and the communication apparatus includes: a processing module, configured to generate a first signal formed by a high-level pulse and a low-level pulse based on an information sequence; and a sending module, configured to send the first signal.

In a fourth aspect, the present disclosure provides a communication apparatus, and the communication apparatus includes: a receiving module, configured to receive a first signal formed by a high-level pulse and a low-level pulse; and a processing module, configured to perform energy charging and acquire an information sequence based on the first signal.

In a fifth aspect, the present disclosure provides a communication apparatus, including: a processor and a memory. The memory stores instructions executable by the processor; the processor is configured to, upon executing the instructions, enable the communication apparatus to implement any method provided in the first aspect or the second aspect described above.

In a sixth aspect, the present disclosure provides a computer-readable storage medium, and the computer-readable storage medium stores computer instructions, and when the computer instructions are run on a computer, the computer performs any method provided in the first aspect or the second aspect.

In a seventh aspect, the present disclosure provides a computer program product containing computer instructions, and when the computer instructions are run on a computer, the computer performs any method provided in the first aspect or the second aspect.

### BRIEF DESCRIPTION OF THE DRAWINGS

FIG. 1 is an architectural schematic diagram of a communication system according to the embodiments of the present disclosure.
FIG. 2 is a flow schematic diagram of an information transmission method according to the embodiments of the present disclosure.
FIG. 3 is a flow schematic diagram of another information transmission method according to the embodiments of the present disclosure.
FIG. 4 is a schematic diagram of first information according to the embodiments of the present disclosure.
FIG. 5 is a schematic diagram of another first information according to the embodiments of the present disclosure.
FIG. 6 is a schematic diagram of yet another first information according to the embodiments of the present disclosure.
FIG. 7 is a schematic diagram of yet another first information according to the embodiments of the present disclosure.
FIG. 8 is a schematic diagram of second information according to the embodiments of the present disclosure.
FIG. 9 is a schematic diagram of yet another first information according to the embodiments of the present disclosure.
FIG. 10 is a schematic diagram of another second information according to the embodiments of the present disclosure.
FIG. 11 is a schematic diagram of yet another first information according to the embodiments of the present disclosure.
FIG. 12 is a schematic diagram of yet another second information according to the embodiments of the present disclosure.
FIG. 13 is a schematic diagram of yet another first information according to the embodiments of the present disclosure.
FIG. 14 is a schematic diagram of yet another first information according to the embodiments of the present disclosure.
FIG. 15 is a schematic diagram of yet another first information according to the embodiments of the present disclosure.
FIG. 16 is a schematic diagram of yet another first information according to the embodiments of the present disclosure.
FIG. 17 is a schematic diagram of yet another first information according to the embodiments of the present disclosure.
FIG. 18 is a schematic diagram of yet another first information according to the embodiments of the present disclosure.
FIG. 19 is a schematic diagram of yet another first information according to the embodiments of the present disclosure.
FIG. 20 is a schematic diagram of yet another first information according to the embodiments of the present disclosure.
FIG. 21 is a schematic diagram of yet another second information according to the embodiments of the present disclosure.
FIG. 22 is a schematic diagram of yet another first information according to the embodiments of the present disclosure.
FIG. 23 is a schematic diagram of yet another first information according to the embodiments of the present disclosure.
FIG. 24 is a schematic diagram of yet another second information according to the embodiments of the present disclosure.
FIG. 25A is a schematic diagram of yet another first information according to the embodiments of the present disclosure.
FIG. 25B is a schematic diagram of yet another first information according to the embodiments of the present disclosure.
FIG. 25C is a schematic diagram of yet another first information according to the embodiments of the present disclosure.
FIG. 25D is a schematic diagram of yet another first information according to the embodiments of the present disclosure.
FIG. 25E is a schematic diagram of yet another first information according to the embodiments of the present disclosure.
FIG. 25F is a schematic diagram of yet another first information according to the embodiments of the present disclosure.
FIG. 26 is a schematic diagram of yet another second information according to the embodiments of the present disclosure.
FIG. 27A is a schematic diagram of yet another first information according to the embodiments of the present disclosure.
FIG. 27B is a schematic diagram of yet another first information according to the embodiments of the present disclosure.
FIG. 28 is a flow schematic diagram of yet another information transmission method according to the embodiments of the present disclosure.
FIG. 29 is a schematic diagram of transmitted information according to the embodiments of the present disclosure.
FIG. 30 is a flow schematic diagram of an information receiving method according to the embodiments of the present disclosure.
FIG. 31 is a composition schematic diagram of a communication apparatus according to the embodiments of the present disclosure.
FIG. 32 is a composition schematic diagram of another communication apparatus according to the embodiments of the present disclosure.
FIG. 33 is a structural schematic diagram of a communication apparatus according to the embodiments of the present disclosure.

### DETAILED DESCRIPTION

Below, the technical solutions in the embodiments of the present disclosure will be described clearly and completely with reference to the drawings in the embodiments of the present disclosure. Obviously, the described embodiments are only a part of the embodiments of the present disclosure, rather than all of the embodiments. Based on the embodiments in the present disclosure, all other embodiments obtained by those ordinary skilled in the art without creative work belong to the scope of protection of the present disclosure.

In the description of the present disclosure, unless otherwise stated, "/" indicates the meaning of "or", for example, A/B may indicate A or B. Herein, "and/or" is only a description of an association relationship of associated objects, indicating that three relationships may exist, for example, A and/or B may indicate: only A, only B, and both A and B. In addition, "at least one" refers to one or more, and "multiple/plurality of" refers to two or more. The terms "first", "second", and the like do not limit the number and execution order, and the terms "first", "second", and the like also do not necessarily limit different items.

It should be noted that, in the present disclosure, terms such as "exemplary (exemplarily)" or "for example/such as/e.g." are used to indicate examples, illustrations, or descriptions. Any embodiment or design solution described with "exemplary (exemplarily)" or "for example/such as/e.g." in the present disclosure should not be interpreted as being more preferred or advantageous than other embodiments or design solutions. Precisely, the use of terms such as "exemplary (exemplarily)" or "for example/such as/e.g." is intended to present related concepts in specific manners.

Currently, the passive internet of things (Passive-IoT) has received widespread attention. A passive terminal in the passive internet of things has advantages such as no need for an external power source, strong adaptability, high reliability, high security, low cost, easy installation, and good maintainability, etc., and therefore, is widely applied in many fields. However, the passive terminal needs to harvest energy from the environment, and the energy harvesting efficiency may be low, which may further limit the working time, working distance, range, etc., of the device.

In view of this, the present disclosure provides a data information transmission method, and the data information transmission method includes: generating a first signal formed by a high-level pulse and a low-level pulse based on an information sequence, and sending the first signal. In this way, while transmitting information to a receiving side, the high-level pulse in the first signal may also be used to provide energy to the receiving side.

In some embodiments, in the passive internet of things, a communication mode centered on backscatter may be used to implement the information transmission to the receiving side.

Backscatter communication (BSC) is a wireless communication technology that uses the principle of radio frequency signal backscatter for communication. In the backscatter communication, the sending side device may enhance the reflection of an incident radio frequency signal by adjusting the matching between a receiving antenna and impedance, and modulate sensing data acquired by itself onto the reflected signal to complete the sending of the data.

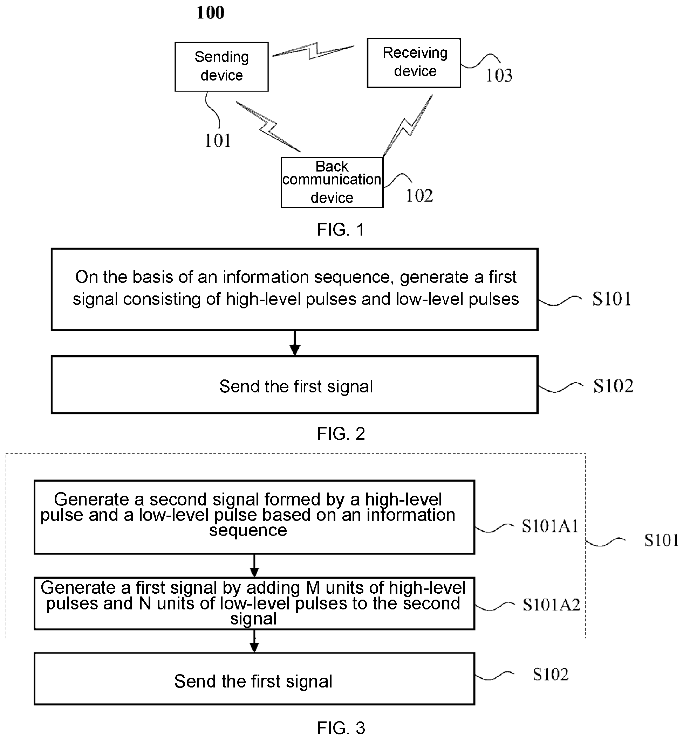

To facilitate understanding of the technical solutions provided in the present disclosure, FIG. 1 shows a communication system, and the communication system may use the above-mentioned backscatter communication technology. As shown in FIG. 1, a communication system 100 includes a sending device 101, a back communication device 102, and a receiving device 103.

The sending device 101 may also be referred to as a helper, an exciter, an excitation device, or the like, which is not limited herein. The back communication device 102 may also be referred to as a backscatter device, a reflection device, an electronic tag, or a tag, or the like, which is not limited herein. The receiving device 103 may also be referred to as a receiving machine, a receiver, or a reader-writer, or the like, which is not limited herein. The sending device may also be a base station, a reader-writer, a relay device, or the like, and the receiving device may also be a base station, a reader-writer, a relay device, or the like, and the sending device and the receiving device may be the same or different. The excitation device mainly sends an excitation signal, to provide energy and carriers to the tag, and activate the tag. The tag is a passive device, and when it receives the excitation signal sent from the excitation device, it starts to reflect the signal. The tag may be considered as a full-duplex device, which, while receiving the energy/signal/carrier, also modulates and reflects its own information. The reader-writer may control the excitation device to send an instruction and excitation, and simultaneously receive information from the tag. In some scenarios, the excitation device and the receiving device may be integrated into a device, that is, the integrated device may both send the excitation signal and have a function for receiving the reflected signal. In some scenarios, the excitation device and the receiving device may adopt a separated architecture, that is, the excitation device and the receiving device are two devices respectively, where the excitation device is used to send the excitation signal, and the receiving device is used to receive the reflected signal. It should be noted that, the embodiments of the present disclosure are all described based on a scenario where the excitation device and the receiving device in the backscatter communication system are two devices respectively.

The method provided in the present disclosure may be applied to any current or future communication system using the reflection communication technology, for example, global system of mobile communication (GSM), code division multiple access (CDMA) system, wideband code division multiple access (WCDMA) system, general packet radio service (GPRS), long term evolution (LTE) system, LTE frequency division duplex (FDD) system, LTE time division duplex (TDD) system, universal mobile telecommunication system (UMTS), worldwide interoperability for microwave access (WiMAX) communication system, 5th-generation (5G) system or new radio (NR), and future communication systems, etc., which are not limited herein.

In some embodiments, the excitation device involved in the embodiments of the present disclosure may be a network device, and the reader-writer may be a terminal device; or, the excitation device is a terminal device, and the reader-writer is a network device; or, both the excitation device and the reader-writer may be network devices; or, both the excitation device and the reader-writer may be terminal devices, etc., which are not limited herein. The excitation device may, under the coordination and control of the reader-writer, send an excitation signal to the tag on a specified time-frequency resource, to complete the communication process. For example, in an application scenario of the internet of things, tag devices may be, as low-cost tags, installed in large quantities on objects, and when the network device and the terminal device need electronic tag information, they may charge the tag devices to acquire the information.

The network device may be used to implement functions such as resource scheduling, radio resource management, and radio access control for the terminal device. For example, the network device may be any node such as a base station transceiver, a wireless base station, a wireless transceiver, a small base station, a radio access point, a transmission and reception point (TRP), a transmission point (TP), an evolved Node B (eNB), a Home Node B, a Home Evolved Node B, a reader-writer, or some other access nodes. In some embodiments, the communication system 100 may further include different types of base stations, for example, a macro cell base station and/or a small cell base station.

The terminal device may also be referred to as a terminal, user equipment, a mobile station, a mobile terminal, or the like. The terminal device may be an internet of things (IoT) device, used for various information collection, and then after forward error correction coding of data information, send the data to the base station. The terminal device may also be a mobile device such as a mobile phone, a tablet computer, a computer, a car, an electric vehicle with wireless transceiver functions, or the like. In addition, the terminal device may be fixed or mobile. Various types of terminal devices may also include or be referred to by those skilled in the art as: mobile stations, user stations, mobile units, user units, wireless units, remote units, mobile devices, wireless devices, wireless communication devices, remote devices, mobile user stations, access terminals, mobile terminals, wireless terminals, remote terminals, handheld apparatuses, user agents, mobile clients, clients, passive tags, or some other possible devices. The various types of UEs may also be cellular phones, personal digital assistants (PDAs), wireless modems, wireless communication devices, handheld devices, tablet computers, laptop computers, cordless phones, wireless local loop (WLL) stations, and so on. The various types of UEs may communicate with various types of base stations and network devices (including a macro eNB (Evolved Node B), a small cell eNB, a relay base station, and so on). The wireless communication system 100 may also include an IoT system or may be a part of an IoT system.

As shown in FIG. 2, it illustrates an information transmission method according to the embodiments of the present disclosure, the information transmission method includes the following S101 and S102.

In S101: a first signal formed by a high-level pulse and a low-level pulse is generated based on an information sequence.

The above information sequence is a sequence generated based on data to be transmitted. In addition, a length of the information sequence may be K bits, where K≥1.

In some embodiments, the length of the information sequence is determined according to one of: being preset, or being configured via signaling. Exemplarily, the sending side device may receive signaling used to indicate the length of the information sequence (that is, the value of K), for example, the length of the information sequence is 1 bit; and then, based on the signaling, the sending side device may determine an information sequence with a length of 1 bit.

In an implementation, a second signal formed by a high-level pulse and a low-level pulse may be generated first, and then the first signal is generated based on the second signal. As shown in FIG. 3, it may be implemented as the following S101A1 and S101A2, for example.

In S101A1: a second signal formed by a high-level pulse and a low-level pulse is generated based on the information sequence.

Different features of the second signal correspond to different information sequences. That is, different features of the second signal correspond to different information sequences with a length of K bits.

In some embodiments, different features of the second signal correspond to different information sequences, including at least one of: different lengths of the second signal correspond to different information sequences, different combination orders of the high-level pulse and the low-level pulse in the second signal correspond to different information sequences, different width combinations of the high-level pulse and/or the low-level pulse in the second signal correspond to different information sequences, different widths of the high-level pulse and/or the low-level pulse in the second signal correspond to different values of a bit in the information sequence, different width ratios between two consecutive high-level pulses in the second signal correspond to different values of a bit in the information sequence, different width ratios between two consecutive low-level pulses in the second signal correspond to different values of a bit in the information sequence, different width ratios between a high-level pulse and a low-level pulse that are consecutive in the second signal correspond to different values of a bit in the information sequence.

In some embodiments, the above information sequence may also correspond to multiple sequence states, and multiple sequences are divided into multiple groups. Exemplarily, the above information sequence may be an information sequence with a length of K bits, and the information sequence with a length of K bits may correspond to 2^{k} sequence states, and then the 2^{k} sequence states may be divided into multiple groups.

Among the multiple groups of sequence states, information sequences corresponding to sequence states belonging to a same group have a same length, the sequence states belonging to the same group are different from each other, and different width combinations of the high-level pulse and/or the low-level pulse in the second signal correspond to the different sequence states belonging to the same group. In addition, second signals corresponding to sequence states belonging to different groups have different signal lengths.

In some embodiments, the second signal is generated based on the information sequence through a preset waveform coding scheme or mapping scheme.

In an example, the preset waveform coding scheme may be a Manchester waveform coding scheme with a rate of 1/2 or a Manchester waveform coding scheme with a rate of 1/4. That is, the second signal may be generated based on the information sequence with a length of K bits and using the Manchester waveform coding scheme with a rate of 1/2 or 1/4.

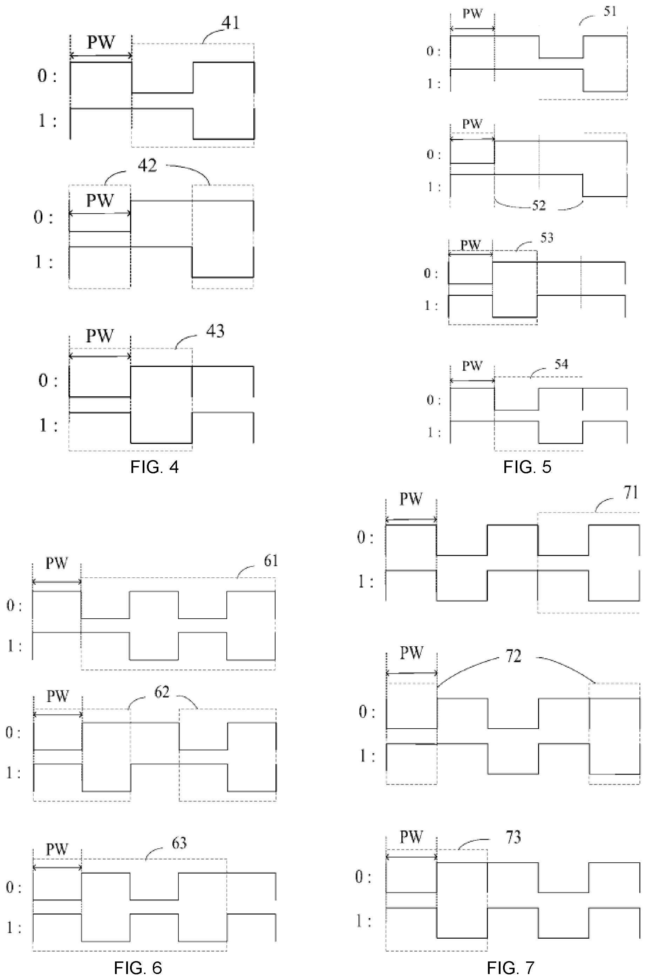

Exemplarily, as shown in FIG. 4, the value of K is 1, and the second signal is generated by using the Manchester waveform coding scheme with a rate of 1/2. In FIG. 4, the second signal is in indication box 41, indication box 42, and indication box 43, where different features of the second signal correspond to different information sequences. In an example, different combination orders of the high-level pulse and the low-level pulse in the second signal correspond to different information sequences. As shown in FIG. 4, K=1, and the bit value of the information sequence is 0, then the second signal is formed by the low-level pulse and the high-level pulse with equal pulse widths in order; the bit value of the information sequence is 1, then the second signal is formed by the low-level pulse and the high-level pulse with equal pulse widths in order.

In S101A2: a first signal is generated by adding M units of high-level pulses and N units of low-level pulses to the second signal.

M is an integer greater than or equal to 1, N is an integer greater than or equal to 0, and M is greater than N.

In some embodiments, a pulse width of a unit of high-level pulse and a pulse width of a unit of low-level pulse above are determined according to one of: a preset pulse width value, or being configured via signaling.

In an example, the value of N may be 0, that is, M units of high-level pulses may be added to the second signal to generate the first signal.

In some embodiments, in the first signal, the M units of high-level pulses satisfy at least one of: M₁ units of high-level pulses being located before a first pulse in the second signal; M₂ units of high-level pulses being located after a last pulse in the second signal; M₃ units of high-level pulses being located in the second signal. M₁, M₂, and M₃ are all integers less than or equal to M, and a sum of M₁, M₂, and M₃ is equal to M.

Exemplarily, the value of M₁ is equal to M, and the values of M₂ and M₃ are both 0, that is, M units of high-level pulses are all located before the first pulse of the second signal. Alternatively, the value of M₂ is equal to M, and the values of M₁ and M₃ are both 0, that is, M units of high-level pulses are all located after the last pulse of the second signal. Alternatively, the values of M₁ and M₂ are greater than 0, and the value of M₃ is 0, that is, the M units of high-level pulses include two parts: one part is M₁ units of high-level pulses, located before the first pulse of the second signal; another part is M₂ units of high-level pulses, located after the last pulse of the second signal. It should be understood that the above are only exemplary descriptions of the values of M₁, M₂, and M₃; there are many other possible cases for the values of M₁, M₂, and M₃, which are not enumerated one by one here.

Moreover, the following provides exemplary descriptions for this embodiment by Example 1 to Example 3.

Example 1: as shown in FIG. 4, the value of K is 1, M=1, and the second signal is generated by using the Manchester waveform coding scheme with a rate of 1/2. The pulse width of a unit of high-level pulse and the pulse width of a unit of low-level pulse are both PW. As shown by the second signal in indication box 41 in FIG. 4, in the first signal, M=1 unit of high-level pulse is all located before the first pulse of the second signal; and the ratio of high-level pulses in the first signal to all pulses in the first signal is 2/3.

Alternatively, as shown by the second signal in indication box 42 in FIG. 4, in the first signal, M=1 unit of high-level pulse is all located in the second signal; and, the ratio of high-level pulses in the first signal to all pulses in the first signal is 2/3.

Alternatively, as shown by the second signal in indication box 43 in FIG. 4, in the first signal, M=1 unit of high-level pulse is all located after the last pulse of the second signal; and the ratio of high-level pulses in the first signal to all pulses in the first signal is 2/3.

Example 2: as shown in FIG. 5, the value of K is 1, M>1, and the second signal is generated by using the Manchester waveform coding scheme with a rate of 1/2. The pulse width of a unit of high-level pulse and the pulse width of a unit of low-level pulse are both PW. In FIG. 5, the second signal is in indication box 51, indication box 52, indication box 53, and indication box 54. As shown by the second signal in indication box 51 in FIG. 5, in the first signal, M=2 units of high-level pulses are all located before the first pulse of the second signal; and the ratio of high-level pulses in the first signal to all pulses in the first signal is 3/4.

Alternatively, as shown by the second signal in indication box 52 in FIG. 5, in the first signal, M=2 units of high-level pulses are all located in the second signal; and the ratio of high-level pulses in the first signal to all pulses in the first signal is 3/4.

Alternatively, as shown by the second signal in indication box 53 in FIG. 5, in the first signal, M=2 units of high-level pulses are all located after the last pulse of the second signal; and the ratio of high-level pulses in the first signal to all pulses in the first signal is 3/4.

Alternatively, as shown by the second signal in indication box 54 in FIG. 5, in the first signal, the M=2 units of high-level pulses include two parts, each part including one high-level pulse; one part of the high-level pulses is located before the first pulse of the second signal, and another part is located after the last pulse of the second signal; and, the ratio of high-level pulses in the first signal to all pulses in the first signal is 3/4.

In addition, as shown in FIG. 5, different combination orders of the high-level pulse and the low-level pulse in the second signal correspond to different information sequences. When K=1, the bit value of the information sequence is 0, then the second signal is formed by a low-level pulse and a high-level pulse with equal pulse widths in order; or, the bit value of the information sequence is 1, then the second signal is formed by a high-level pulse and a low-level pulse with equal pulse widths in order.

Example 3: as shown in FIG. 6, the value of K is 1, M=1, and the second signal is generated by using the Manchester waveform coding scheme with a rate of 1/4. The pulse width of a unit of high-level pulse and the pulse width of a unit of low-level pulse are both PW, and the second signal is in indication box 61, indication box 62, and indication box 63 in FIG. 6. As shown by the second signal in indication box 61 in FIG. 6, in the first signal, M=1 unit of high-level pulse is all located before the first pulse of the second signal; and the ratio of the high-level pulses in the first signal to all pulses in the first signal is 3/5.

Alternatively, as shown by the second signal in indication box 62 in FIG. 6, in the first signal, M=1 unit of high-level pulse is all located in the second signal; and the ratio of the high-level pulses in the first signal to all pulses in the first signal is 3/5.

Alternatively, as shown by the second signal in indication box 63 in FIG. 6, in the first signal, M=1 unit of high-level pulse is all located after the last pulse of the second signal; and the ratio of the high-level pulses in the first signal to all pulses in the first signal is 3/5.

In addition, as shown in FIG. 6, different combination orders of the high-level pulses and the low-level pulses in the second signal correspond to different information sequences. When K=1, the bit value of the information sequence is 0, then the second signal is formed by 2 low-level pulses and 2 high-level pulses with equal pulse widths, alternating in order; or, the bit value of the information sequence is 1, then the second signal is formed by 2 high-level pulses and 2 low-level pulses with equal pulse widths, alternating in order.

In another example, the value of N may be greater than 0, that is, M units of high-level pulses and N units of low-level pulses are added to the second signal to generate the first signal.

In some embodiments, in the first signal, N units of low-level pulses satisfy at least one of: N₁ units of low-level pulses being located before a first pulse in the second signal, N₂ units of low-level pulses being located after a last pulse in the second signal, and N₃ units of low-level pulses being located in the second signal. N₁, N₂, and N₃ are all integers less than or equal to N, and a sum of N₁, N₂, and N₃ is equal to N. Moreover, in the first signal, M units of high-level pulses satisfy at least one of: M₁ units of high-level pulses being located before a first pulse in the second signal, M₂ units of high-level pulses being located after a last pulse in the second signal, and M₃ units of high-level pulses being located in the second signal. M₁, M₂, and M₃ are all integers less than or equal to M, and a sum of M₁, M₂, and M₃ is equal to M.

Exemplarily, the value of M₁ is equal to M, the value of N₁ is equal to N, and the values of M₂, M₃, N₂, and N₃ are all 0, that is, M units of high-level pulses and the N units of low-level pulses are all located before the first pulse of the second signal. Alternatively, the value of M₂ is equal to M, the value of N₂ is equal to N, and the values of M₁, M₃, N₁, and N₃ are all 0, that is, M units of high-level pulses and the N units of low-level pulses are all located after the last pulse of the second signal. Alternatively, the values of M₁, M₂, N₁, and N₂ are all greater than 0, and the values of M₃ and N₃ are both 0, that is, the M units of high-level pulses include two parts: one part is M₁ units of high-level pulses located before the first pulse of the second signal, and another part is M₂ units of high-level pulses located after the last pulse of the second signal; and the N units of low-level pulses also include two parts: one part is N₁ units of low-level pulses located before the first pulse of the second signal, and another part being N₂ units of low-level pulses located after the last pulse of the second signal. It should be understood that the above is only an exemplary description of the values of M₁, M₂, M₃, N₁, N₂, and N₃; there are many other possible cases for the values of M₁, M₂, M₃, N₁, N₂, and N₃, which are not enumerated one by one here. Moreover, the following provides an exemplary description for this embodiment by Example 4.

Example 4: as shown in FIG. 7, the value of K is 1, M=2 and N=1, and the second signal is generated by using the Manchester waveform coding scheme with a rate of 1/2. The pulse width of a unit of high-level pulse and the pulse width of a unit of low-level pulse are both PW. As shown by the second signal in indication box 71 in FIG. 7, in the first signal, M=2 units of high-level pulses and N=1 unit of low-level pulse are all located before the first pulse of the second signal; and the ratio of the high-level pulses in the first signal to all pulses in the first signal is 3/5.

Alternatively, as shown by the second signal in indication box 72 in FIG. 7, in the first signal, M=2 units of high-level pulses and N=1 unit of low-level pulse are all located in the second signal; and the ratio of the high-level pulses in the first signal to all pulses in the first signal is 3/5.

Alternatively, as shown by the second signal in indication box 73 in FIG. 7, in the first signal, M=2 units of high-level pulses and N=1 unit of low-level pulse are all located after the last pulse of the second signal; and the ratio of the high-level pulses in the first signal to all pulses in the first signal is 3/5.

In addition, as shown in FIG. 7, different combination orders of the high-level pulses and the low-level pulse in the second signal correspond to different information sequences. When K=1, the bit value of the information sequence is 0, then the second signal is formed by the low-level pulse and the high-level pulses with equal pulse widths in order; or, the bit value of the information sequence is 1, then the second signal is formed by the high-level pulses and the low-level pulse with equal pulse widths in order.

In some embodiments, the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively. Exemplarily, the modulation symbol may be, for example, an on-off keying (OOK) modulation symbol, an amplitude shift keying (ASK) modulation symbol, an orthogonal frequency-division multiplexing (OFDM) modulation symbol, etc., and a length of the modulation symbol is a duration of the symbol.

In some embodiments, the length of the second signal is determined based on the duration of the second signal. The duration of the pulse of the second signal is determined based on the pulse width of the high-level pulse and the pulse width of the low-level pulse in the second signal.

In some embodiments, the second signal may also be generated based on the signal sequence with a length of K and a preset mapping scheme. Furthermore, the first signal may be obtained based on the second signal, and additional M units of high-level pulses and N units of low-level pulses. The pulse width of a unit of high-level pulse or a unit of low-level pulse may be PW, and the pulse width of a unit of high-level pulse or a unit of low-level pulse may be determined by pre-setting a pulse width value or being configured by signaling. Moreover, M≥1, N≥0, and M>N. In the first signal, the M units of high-level pulses and the N units of low-level pulses may all be located before the second signal, all be located in the second signal, or all be located after the second signal. Alternatively, the M units of high-level pulses and the N units of low-level pulses may be divided into multiple parts, where the parts are located before the second signal, in the second signal, or after the second signal, which is not repeated here. Moreover, the following provides exemplary descriptions for this embodiment by Example 5 to Example 7.

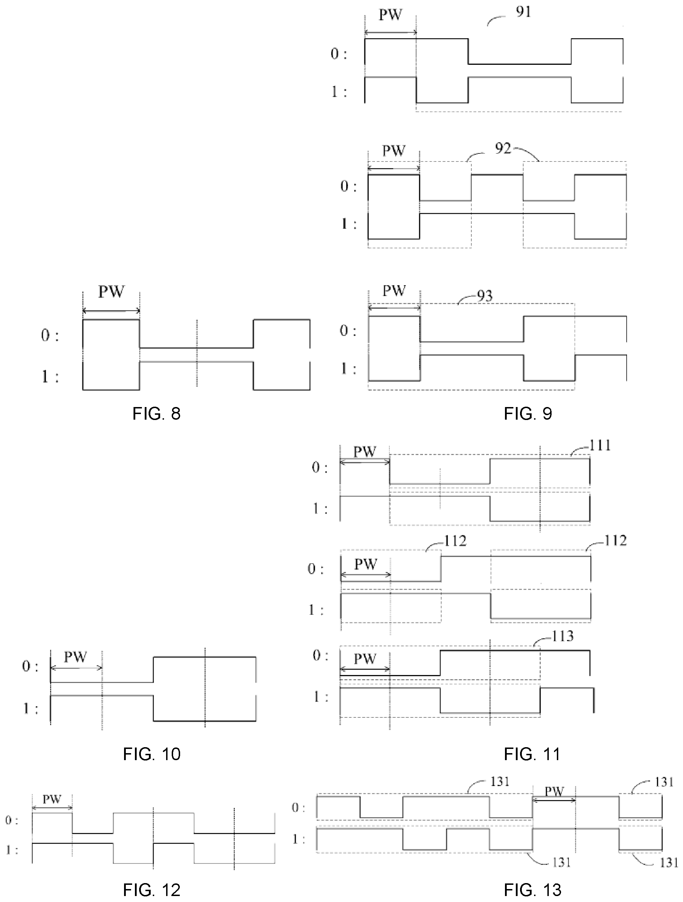

Example 5: K=1, the second signal is generated from a signal sequence with a length of K by a preset mapping scheme, and, different combination orders of the high-level pulse(s) and the low-level pulse(s) in the second signal correspond to different information sequences. As shown in FIG. 8, in a case where the value of the signal sequence is 1, the second signal is formed by connecting a low-level pulse with a pulse width of PW, a high-level pulse with a pulse width of 2PW, and a low-level pulse with a pulse width of PW, in order. Alternatively, when the value of the signal sequence is 0, the second signal is formed by connecting a high-level pulse with a pulse width of PW, a low-level pulse with a pulse width of 2PW, and a high-level pulse with a pulse width of PW, in order. Furthermore, M units of high-level pulses and N units of low-level pulses may be added to the second signal to generate the first signal. As shown in FIG. 9, M=1, N=0, and the pulse width of a unit of high-level pulse is PW. As shown by the second signal in indication box 91 in FIG. 9, M=1 unit of high-level pulse is located before the first pulse of the second signal; and the ratio of the high-level pulses in the first signal to all pulses in the first signal is 3/5. Alternatively, as shown by the second signal in indication box 92 in FIG. 9, M=1 unit of high-level pulse is located in the second signal; and the ratio of the high-level pulses in the first signal to all pulses in the first signal is 3/5. Alternatively, again, as shown by the second signal in indication box 93 in FIG. 9, M=1 unit of high-level pulse is located after the last pulse of the second signal; and the ratio of the high-level pulses in the first signal to all pulses in the first signal is 3/5.

Example 6: K=1, the second signal is generated from a signal sequence with a length of K by a preset mapping scheme, and different combination orders of the high-level pulse(s) and the low-level pulse(s) in the second signal represent different K-bit signal sequences. As shown in FIG. 10, in a case where the bit value of the signal sequence is 1, the second signal is formed by connecting a high-level pulse with a pulse width of 2PW and a low-level pulse with a pulse width of 2PW in order. In a case where the bit value of the signal sequence is 0, the second signal is formed by connecting a low-level pulse with a pulse width of 2PW and a high-level pulse with a pulse width of 2PW in order. Furthermore, M units of high-level pulses and N units of low-level pulses may be added to the second signal to generate the first signal. As shown in FIG. 11, M=1, N=0, and the pulse width of a unit of high-level pulse is PW. As shown by the second signal in indication box 111 in FIG. 11, M=1 unit of high-level pulse is all located before the second signal, and the high-level ratio of the first signal is 3/5. Alternatively, as shown by the second signal in indication box 112 in FIG. 11, M=1 unit of high-level pulse is all located in the second signal, and the high-level ratio of the first signal is 3/5. Alternatively, again, as shown by the second signal in indication box 113 in FIG. 11, M=1 unit of high-level pulse is all located after the second signal, and the high-level ratio of the first signal is 3/5.

Example 7: K=1, the second signal is generated from a signal sequence with a length of K by a preset mapping scheme, and different width ratios of two high-level pulses in the second signal correspond to different information sequences. As shown in FIG. 12, in a case where the bit value of the signal sequence is 0, a ratio of a width of a first high-level pulse to a width of a second high-level pulse in the second signal is less than 1. In a case where the bit value of the signal sequence is 1, the ratio of the width of the first high-level pulse to the width of the second high-level pulse in the second signal is greater than 1. Furthermore, the first signal may be generated based on the second signal, and additional M units of high-level pulses and N units of low-level pulses. As shown in FIG. 13, M=2, N=0, and the pulse width of a unit of high-level pulse is PW. As shown by the second signal in indication box 131 in FIG. 13, M=2 units of high-level pulses are all located in the last low-level pulse of the second signal, and the high-level ratio of the first signal is 5/8.

In some embodiments, the value of K may also be greater than 1. Moreover, the following Example 8 to Example 11 provide exemplary descriptions of cases where the value of K is greater than 1 in this embodiment.

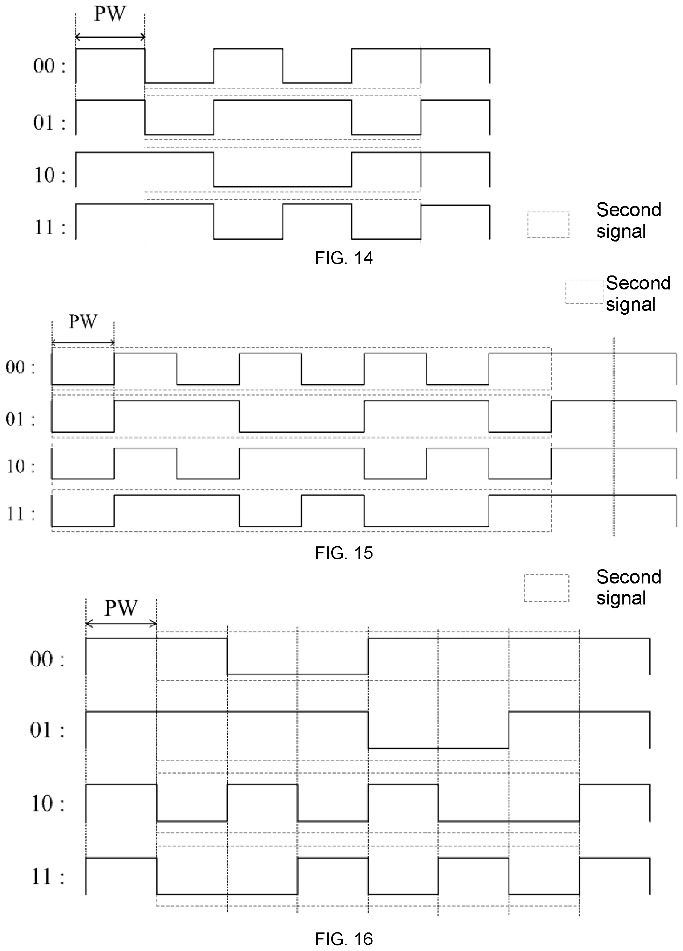

Example 8: as shown in FIG. 14, K=2, M=2, N=0, and the bit value of the information sequence may include 00, 01, 10, or 11. The second signal is determined based on the information sequence and the Manchester waveform coding with a rate of 1/2. Moreover, different combination orders of the high-level pulse(s) and the low-level pulse(s) in the second signal correspond to different information sequences. Then, M=2 units of high-level pulses may be added to the second signal to generate the first signal. As shown in FIG. 14, M=2 units of high-level pulses may be divided into two parts, one part located before the second signal and another part located after the second signal, and the high-level ratio in the first signal is 2/3.

Example 9, as shown in FIG. 15, K=2, M=2, N=0. The second signal is determined based on the information sequence and a preset mapping scheme. Moreover, different width combinations of high-level pulses and low-level pulses in the second signal correspond to different information sequences. Furthermore, the first signal may be formed by the second signal and additional M=2 units of high-level pulses. As shown in FIG. 15, M=2 units of high-level pulses are all located after the second signal, and the high-level ratio in the first signal is 3/5.

Example 10, as shown in FIG. 16, K=2, M=2, N=0. The second signal is determined based on the information sequence and a preset mapping scheme. Moreover, different width combinations of high-level pulses and low-level pulses in the second signal correspond to different information sequences. Furthermore, the first signal may be formed by the second signal and additional M=2 units of high-level pulses. As shown in FIG. 16, M=2 units of high-level pulses are divided into two parts, each including 1 unit of high-level pulse, with one part located before the second signal and another part located after the second signal; and in a case where bit combinations of 0 and 1 have an equal probability, the high-level ratio in the first signal is 5/8.

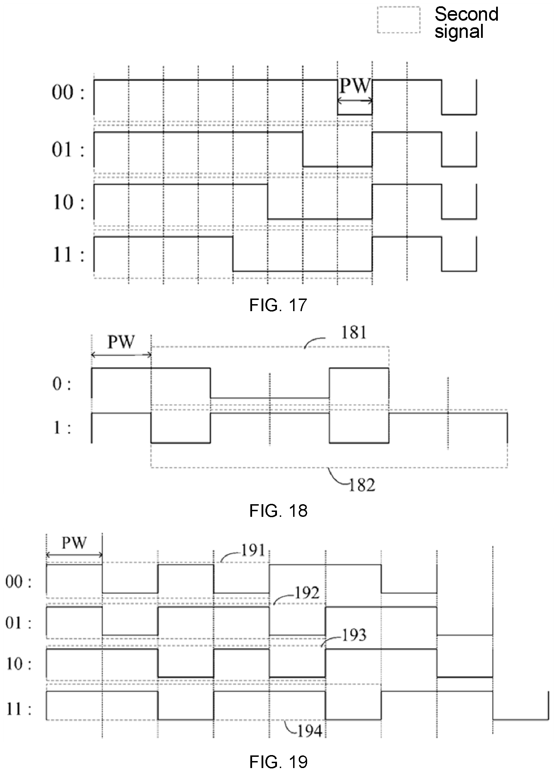

Example 11, as shown in FIG. 17, K=2, M=2, N=1. The second signal is determined based on the information sequence and a preset mapping scheme. Moreover, different width combinations of high-level pulses and low-level pulses in the second signal correspond to different information sequences. Furthermore, the first signal may be formed by the second signal, and additional M=2 units of high-level pulses and N=1 unit of low-level. As shown in FIG. 17, M=2 units of high-level pulses and N=1 unit of low-level are all located after the second signal. In addition, in a case where bit combinations of 0 and 1 have an equal probability, the high-level ratio in the first signal is 15/22. In addition, M=2 units of high-level pulses and N=1 unit of low-level pulse may also all be located before the second signal or in the second signal, or may be divided into multiple parts located before, or in, or after the second signal, respectively, which is not repeated herein.

In some embodiments, for different information sequences, the length of the corresponding generated second signal may also be different. Moreover, the following provides exemplary descriptions for this embodiment by Example 12 and Example 13.

Example 12: as shown in FIG. 18, K=1, and the second signal is determined based on the information sequence through a preset mapping scheme. The bit value of the information sequence is 0, then the corresponding second signal may be shown in indication box 181; the bit value of the information sequence is 1, then the corresponding second signal may be shown in indication box 182. It can be seen that the signal length in indication box 181 is different from the signal length in indication box 182. That is, for different information sequences, the length of the corresponding generated second signal may also be different. Furthermore, M=1 and N=0, the first signal may be formed by the second signal and additional M=1 unit of high-level pulse. As shown in FIG. 18, M=1 unit of high-level pulse is located before the second signal; and in a case where bit 0 and bit 1 have an equal probability, the high-level ratio in the first signal is 2/3.

Example 13: as shown in FIG. 19, K=2, and the second signal is determined based on the information sequence through a preset mapping scheme. High-level pulses in the second signal are determined based on the bit value of the information sequence. For example, a width of an i-th high-level pulse in the second signal is determined by a value of an i-th bit in the information sequence, where 0≤i<K. Exemplarily, in a case where the i-th bit in the information sequence is 1, the width of the i-th high-level pulse in the second signal is 2PW. In a case where the i-th bit in the information sequence is 0, the width of the i-th high-level pulse in the second signal is PW. In addition, a width of a low-level pulse in the second signal is PW. Thus, the bit value of the information sequence is 00, then the corresponding second signal may be shown in indication box 191; the bit value of the information sequence is 01, then the corresponding second signal may be shown in indication box 192; the bit value of the information sequence is 10, the corresponding second signal may be shown in indication box 193; the bit value of the information sequence is 11, the corresponding second signal may be shown in indication box 194. It can be seen that the signal length in indication box 191 is different from the signal lengths in indication box 192 and indication box 193, the signal length in indication box 194 is also different from the signal lengths in indication box 192 and indication box 193, and the signal length in indication box 191 is also different from the signal length in indication box 194. That is, for different information sequences, the length of the corresponding generated second signal may also be different. Furthermore, M=2 and N=1, then the first signal may be formed by the second signal, and additional M=2 units of high-level pulses and N=1 unit of low-level pulse. As shown in FIG. 19, M=2 units of high-level pulses and N=1 unit of low-level pulse are all located after the second signal; and in a case where bit combinations of 0 and 1 have an equal probability, the high-level ratio in the first signal is 5/8.

In some embodiments, the pulse width PW of the additional M units of high-level pulses and N units of low-level pulses in the first signal is less than or equal to the high/low-level pulse width in the second signal. Alternatively, the pulse width PW of the additional M units of high-level pulses and N units of low-level pulses in the first signal is greater than the high/low-level pulse width in the second signal. Moreover, the following provides exemplary descriptions for this embodiment by Example 14 to Example 16.

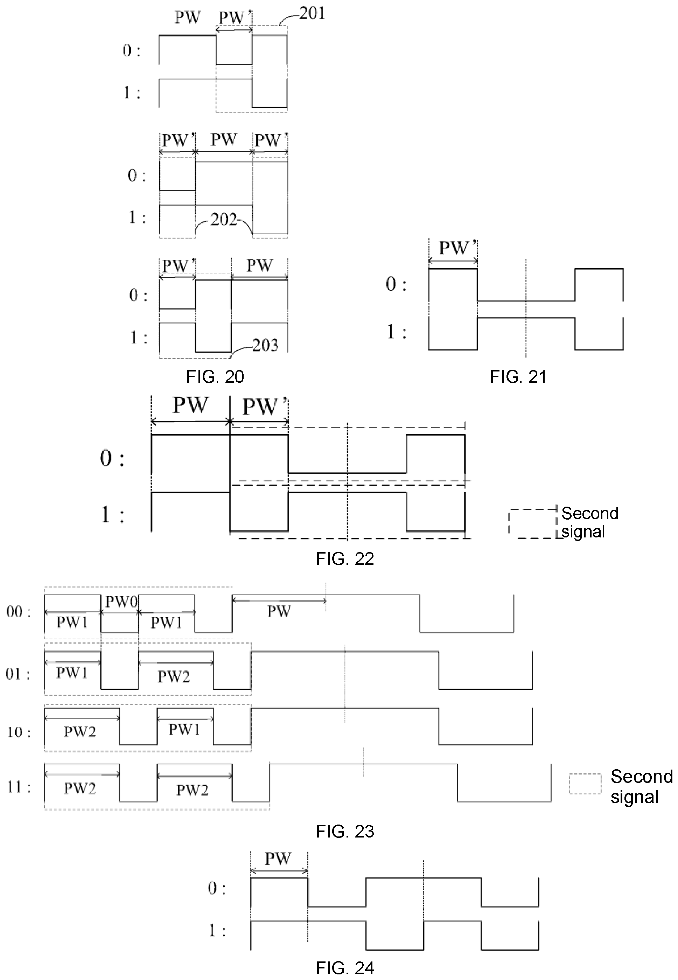

Example 14: K=1, M=1, N=0, and the second signal is determined by the information sequence and the Manchester waveform coding with a rate of 1/2, and different combination orders of the high-level pulse and the low-level pulse in the second signal correspond to different information sequences. As shown in FIG. 20, in a case where a bit value of the signal sequence is 0, the second signal is formed by a low-level pulse and a high-level pulse with a pulse width of PW' in order. Alternatively, in a case where the bit value of the signal sequence is 1, the second signal is formed by a high-level pulse and a low-level pulse with a pulse width of PW' in order. Furthermore, the first signal is formed by the second signal and additional M=1 unit of high-level pulse. A width of the additional M=1 unit of high-level pulse is PW, and PW>PW'. As shown in the second signal in indication box 201, the M=1 unit of high-level pulse is all located before the second signal, and a high-level ratio of the first signal is (PW+PW')/(PW+2PW')>2/3. Alternatively, as shown in the second signal in indication box 202, the M=1 unit of high-level pulse is all located in this second signal, and the high-level ratio of the first signal is (PW+PW')/(PW+2PW')>2/3. Alternatively, as shown in the second signal in indication box 203, the M=1 unit of high-level pulse is all located after the second signal, and the high-level ratio of the first signal is (PW+PW')/(PW+2PW')>2/3.

Example 15: K=1, M=1, N=0, and the second signal is determined by the information sequence and a preset mapping scheme, and different combination orders of high-level pulses and low-level pulses in the second signal correspond to different information sequences. As shown in FIG. 21, in a case where a bit value of the signal sequence is 1, the second signal is formed by connecting a low-level pulse with a pulse width of PW', a high-level pulse with a width of 2PW', and a low-level pulse with a width of PW' in order. Alternatively, in a case where the bit value of the signal sequence is 0, the second signal is formed by connecting a high-level pulse with a pulse width of PW', a low-level pulse with a width of 2PW', and a high-level pulse with a width of PW' in order. Furthermore, the first signal is formed by the second signal and additional M=1 unit of high-level pulse. As shown in FIG. 22, the M=1 unit of high-level pulse is all located before the second signal, and the high-level ratio of the first signal is (PW+2PW')/(PW+4PW').

Example 16: K=2, M=2, N=1, and the second signal is determined by the information sequence and a preset mapping scheme, and different combination orders of high-level pulses and low-level pulses in the second signal correspond to different information sequences. Moreover, different pulse widths of high-level pulses in the second signal correspond to different bit values. That is, a width of an i-th high-level pulse in the second signal is determined by a value of an i-th bit in the information sequence, where 0≤i<K. Exemplarily, if the i-th bit in the information sequence is 1, the width of the i-th high-level pulse in the second signal is PW2. If the i-th bit in the information sequence is 0, the width of the i-th high-level pulse in the second signal is PW1. A width of a low-level pulse in the second signal is PW0, and PW2>PW1≥PW0. Furthermore, the first signal is formed by the second signal, and additional M=2 units of high-level pulses and N=1 unit of low-level pulse. As shown in FIG. 23, the M=2 units of high-level pulses and the N=1 unit of low-level pulse are located after the second signal; and in a case where bit combinations of 0 and 1 have an equal probability, a high-level ratio of the first signal is (PW1+PW2+2PW)/(PW1+PW2+2PW0+3PW).

In some embodiments, the bit length of the information sequence is K, there may be 2^{K} kinds of bit values, which can also be understood as including 2^{K} kinds of information sequences, and the 2^{K} kinds of information sequences may be used to generate 2^{K} kinds of second signals. Furthermore, the 2^{K} kinds of second signals are combined with the additional M high-level pulses and N low-level pulses to generate 2^{K} kinds of first signals. Among the 2^{K} kinds of first signals, the M units of high-level pulses and the N units of low-level pulses are located at the same position of the second signal; for example, the M units of high-level pulses and the N units of low-level pulses are all located before the first pulse of the second signal, or the M units of high-level pulses and the N units of low-level pulses are all located after the last pulse of the second signal, etc., which will not be enumerated one by one.

Alternatively, in some embodiments, among the 2^{K} kinds of first signals, the M units of high-level pulses and the N units of low-level pulses may be located at different positions of the second signal. Moreover, the following provides exemplary descriptions for this embodiment by Example 17 and Example 18.

Example 17: K=1, and the second signal is determined by the information sequence and a preset mapping scheme, and different width ratios of two high-level pulses in the second signal correspond to different information sequences; as shown in FIG. 24, a bit value of the information sequence is 0, then a ratio of a width of a first high-level pulse to a width of a second high-level pulse in the second signal is less than 1. Alternatively, the bit value of the information sequence is 1, then the ratio of the width of the first high-level pulse to the width of the second high-level pulse in the second signal is greater than 1.

Furthermore, the first signal is formed based on the second signal, and additional M units of high-level pulses and N units of low-level pulses. A pulse width of a unit of high-level pulse and a pulse width of a unit of low-level pulse are both PW, which may be determined by being preset or being configured via signaling, M≥1, N≥0, and M>N.

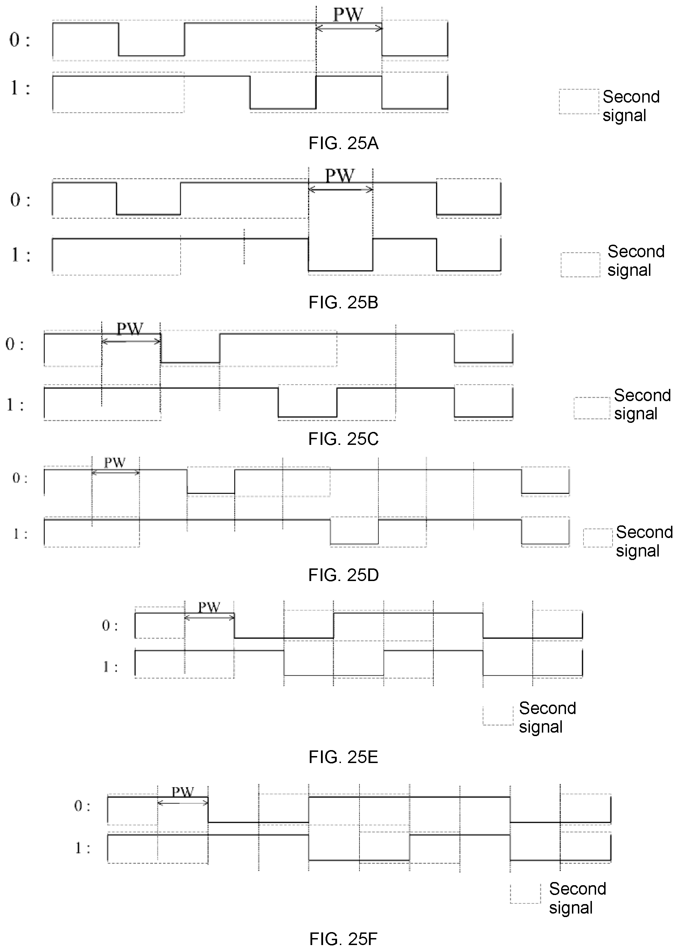

The first signal is formed based on the second signal shown in FIG. 24, and the additional M units of high-level pulses and N units of low-level pulses. As shown in FIG. 25A, M=1, N=0, K=1. When the bit value of the information sequence is 0, in the first signal, the M=1 unit of high-level pulse is located after a second high-level pulse in the second signal. Alternatively, when the bit value of the information sequence is 1, in the first signal, the M=1 unit of high-level pulse is located after a first high-level pulse in the second signal. In addition, a high-level ratio in the first signal is 2/3.

Alternatively, as shown in FIG. 25B, M=2, N=0, K=1. When the bit value of the information sequence is 0, in the first signal, the M=2 units of high-level pulses are both located after the second high-level pulse in the second signal. Alternatively, when the bit value of the information sequence is 1, in the first signal, the M=2 units of high-level pulses are both located after the first high-level pulse in the second signal. Furthermore, the high-level ratio in the first signal is 5/7.

Alternatively, as shown in FIG. 25C, M=3, N=0, K=1. When the bit value of the information sequence is 0, in the first signal, 1 unit of high-level pulse is located after a first high-level pulse in the second signal, and 2 units of high-level pulses are located after a second high-level pulse in the second signal. Alternatively, when the bit value of the information sequence is 1, in the first signal, 2 units of high-level pulses are located after the first high-level pulse in the second signal, and 1 unit of high-level pulse is located after the second high-level pulse in the second signal. In addition, the high-level ratio in the first signal is 3/4.

Alternatively, as shown in FIG. 25D, M=6, N=0, K=1. When the bit value of the information sequence is 0, in the first signal, 2 units of high-level pulses are located after the first high-level pulse in the second signal, and 4 units of high-level pulses are located after the second high-level pulse in the second signal. Alternatively, when the bit value of the information sequence is 1, in the first signal, 4 units of high-level pulses are located after the first high-level pulse in the second signal, and 2 units of high-level pulses are located after the second high-level pulse in the second signal. In addition, the high-level ratio in the first signal is 9/11.

Alternatively, as shown in FIG. 25E, M=2, N=2, K=1. When the bit value of the information sequence is 0, for the M=2 units of high-level pulses and N=2 units of low-level pulses, in the first signal, a sequential combination of 1 unit of high-level pulse and 1 unit of low-level pulse is located after the first high-level pulse in the second signal, and a sequential combination of 1 unit of high-level pulse and 1 unit of low-level pulse is located after the second high-level pulse in the second signal. Alternatively, when the bit value of the information sequence is 1, for the M=2 units of high-level pulses and N=2 units of low-level pulses, in the first signal, a sequential combination of 1 unit of high-level pulse and 1 unit of low-level pulse is located after the first high-level pulse in the second signal, and a sequential combination of 1 unit of high-level pulse and 1 unit of low-level pulse is located after the second high-level pulse in the second signal. In addition, the high-level ratio in the first signal is 5/9.

Alternatively, as shown in FIG. 25F, M=3, N=2, K=1. When the bit value of the information sequence is 0, for the M=3 units of high-level pulses and N=2 units of low-level pulses, in the first signal, a sequential combination of 1 unit of high-level pulse and 1 unit of low-level pulse is located after the first high-level pulse in the second signal, and a sequential combination of 2 units of high-level pulses and 1 unit of low-level pulse is located after the second high-level pulse in the second signal. Alternatively, when the bit value of the information sequence is 1, and in the first signal, among M=3 units of high-level pulses and N=2 units of low-level pulses, a sequential combination of 2 units of high-level pulses and 1 unit of low-level pulse is located after the first high-level pulse in the second signal, and a sequential combination of 1 unit of high-level pulse and 1 unit of low-level pulse is located after the second high-level pulse in the second signal. In addition, the high-level ratio in the first signal is 3/5.

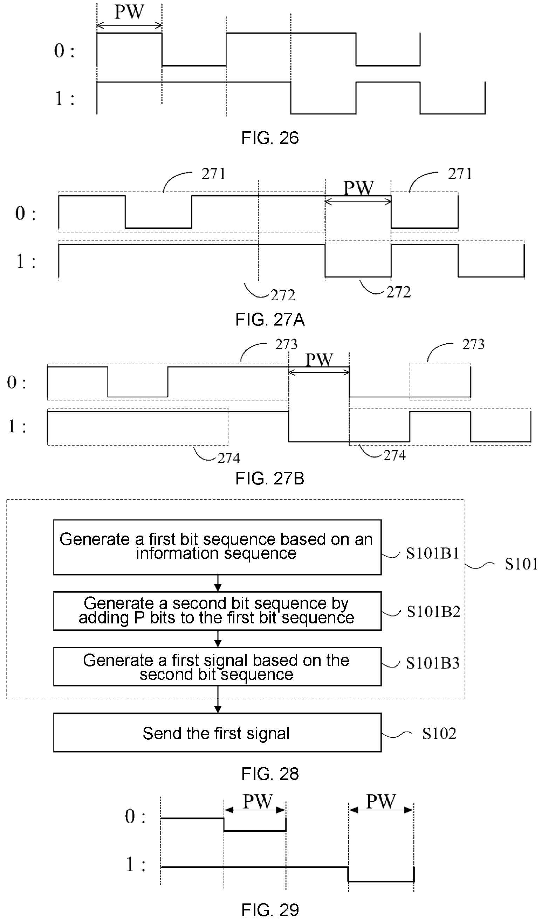

Example 18: K=1, the second signal is determined based on the K-bit information sequence and a preset mapping scheme, and different width ratios of the two high-level pulses in the second signal correspond to different information sequences, and different lengths of the second signal correspond to different information sequences. As shown in FIG. 26, in a case where a bit value of the signal sequence is 0, a ratio of a width of a first high-level pulse to a width of a second high-level pulse in the second signal is less than 1, and the length of the second signal is 5PW. In a case where the bit value of the signal sequence is 1, a ratio of a width of the first high-level pulse to a width of the second high-level pulse in the second signal is greater than 1, and the length of the second signal is 6PW. Furthermore, the first signal may be obtained based on the second signal, and additional M units of high-level pulses and N units of low-level pulses, where M≥1, N>0, and M>N.

The first signal is formed based on the second signal shown in FIG. 26, and the additional M units of high-level pulses and N units of low-level pulses. As shown in FIG. 27A, M=1, N=0. In a case where a bit value of the signal sequence is 0, as shown in the second signal in indication box 271, M=1 unit of high-level pulse is located after the second high-level pulse in the second signal. Alternatively, in a case where the bit value of the signal sequence is 1, as shown in the second signal in indication box 272, M=1 unit of high-level pulse is located after the first high-level pulse in the second signal, and in a case where bit 0 and bit 1 have an equal probability, the high-level ratio of the first signal is 9/13.

Alternatively, as shown in FIG. 27B, K=1, M=1, N=1. In a case where a bit value of the signal sequence is 0, as shown in the second signal in indication box 273, M=1 unit of high-level pulse and N=1 unit of low-level pulse are located after the second high-level pulse in the second signal in order. Alternatively, in a case where the bit value of the signal sequence is 1, as shown in the second signal in indication box 274, M=1 unit of high-level pulse and N=1 unit of low-level pulse is located after the first high-level pulse in the second signal in order, and in a case where bit 0 and bit 1 have an equal probability, the high-level ratio of the first signal is 9/15.

In another implementation, a first bit sequence may be generated first, then a second bit sequence is generated based on the first bit sequence, and furthermore, the aforementioned first signal is determined based on the second bit sequence. As shown in FIG. 28, for example, it may be implemented as the following S101B1 to S101B3.

In S101B1: a first bit sequence is generated based on the information sequence.

In some embodiments, the first bit sequence is generated based on the information sequence through a preset coding scheme or mapping scheme.

In S101B2: P bits are added to the first bit sequence to generate a second bit sequence.

P is a positive integer.

In some embodiments, in the second bit sequence, the P bits satisfy at least one of: P₁ bits being located before the first bit sequence, P₂ bits being located after the first bit sequence, P₃ bits being located in the first bit sequence. P₁, P₂, and P₃ are all integers less than or equal to P, and a sum of P₁, P₂, and P₃ is equal to P.

In S101B3: the first signal is generated based on the second bit sequence.

Different features of the first signal correspond to different second bit sequences.

In some embodiments, different features of the first signal correspond to different second bit sequences, including at least one of: different lengths of the first signal correspond to different second bit sequences, different combination orders of the high-level pulse and the low-level pulse in the first signal correspond to different second bit sequences, different width combinations of the high-level pulse and the low-level pulse in the first signal correspond to different second bit sequences, different widths of the high-level pulse and the low-level pulse in the first signal correspond to different values of a bit in the second bit sequence, different width ratios between two consecutive high-level pulses in the first signal correspond to different values of a bit in the second bit sequence, different width ratios between two consecutive low-level pulses in the first signal correspond to different values of a bit in the second bit sequence, different width ratios between a high-level pulse and a low-level pulse that are consecutive in the first signal correspond to different values of a bit in the second bit sequence.

In some embodiments, the first signal is generated based on the second bit sequence through a preset waveform coding scheme or mapping scheme.

In some embodiments, the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively. Exemplarily, the modulation symbol may be, for example, an on-off keying modulation symbol, an amplitude shift keying modulation symbol, an orthogonal frequency division multiplexing modulation symbol, etc., and the length of the modulation symbol is a duration of the symbol.

In some embodiments, the length of the first signal is determined based on a duration of the first signal. The duration of the pulse of the first signal is determined based on a pulse width of the high-level pulse and a pulse width of the low-level pulse in the first signal.

In some embodiments, the first bit sequence is obtained from the information sequence with a length K=1 through a preset coding scheme or mapping scheme, and P bits are added to the first bit sequence to generate a second bit sequence, where P is a positive integer. Furthermore, the first signal is generated based on the second bit sequence, where different combination orders of the high-level pulse and the low-level pulse in the first signal correspond to different second bit sequences. The following provides exemplary descriptions for this embodiment by Example 19 to Example 25.

Example 19: taking the first signal as shown in the above FIG. 4 as an example, K=1, P=1, the information sequence with a length of K=1 bit may be mapped to a first bit sequence with a length of K1=2 based on a preset mapping scheme, and P=1 bit is added to the first bit sequence to obtain a second bit sequence, where the P=1 bit sequence is 1. Exemplarily, the first bit sequence and the second bit sequence may be shown in Table 1 below, and when a bit value of the information sequence is 0, and a value of the first bit sequence is 01, then, in a case where all P=1 bit is located before the first bit sequence, a value of the second bit sequence is 101, or, in a case where all P=1 bit is located in the first bit sequence, a value of the second bit sequence is 011, or, in a case where all P=1 bit is located after the first bit sequence, a value of the second bit sequence is 011. Alternatively, when a bit value of the information sequence is 1, and a value of the first bit sequence is 10, then, in a case where all P=1 bit is located before the first bit sequence, a value of the second bit sequence is 110, or, in a case where all P=1 bit is located in the first bit sequence, a value of the second bit sequence is 110, or, in a case where all P=1 bit is located after the first bit sequence, a value of the second bit sequence is 101. In addition, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, and the generated first signal may be shown in the above FIG. 4.

**Table 1**

| Information sequence | First bit sequence | Second bit sequence |
|---|---|---|
| 0 | 01 | 101 (P=1 bit is before the first bit sequence) |
| 0 | 01 | 011 (P=1 bit is in the first bit sequence) |
| 0 | 01 | 011 (P=1 bit is after the first bit sequence) |
| 1 | 10 | 110 (P=1 bit is before the first bit sequence) |
| 1 | 10 | 110 (P=1 bit is in the first bit sequence) |
| 1 | 10 | 101 (P=1 bit is after the first bit sequence) |

Example 20: taking the first signal as shown in the above FIG. 5 as an example, K=1, P=2, the information sequence with a length of K=1 bit may be mapped to a first bit sequence with a length of length K1=2 based on a preset mapping scheme, and P=2 bits are added to the first bit sequence to obtain a second bit sequence, where the P=2 bit sequences are 11. Exemplarily, the first bit sequence and the second bit sequence may be shown in Table 2 below, and when a bit value of the information sequence is 0, and a value of the first bit sequence is 01, then, in a case where all P=2 bits are located before the first bit sequence, a value of the second bit sequence is 1101, or, in a case where all P=2 bits are located in the first bit sequence, a value of the second bit sequence is 0111, or, in a case where all P=2 bits are located after the first bit sequence, a value of the second bit sequence is 0111, or, in a case where one bit of the P=2 bits is located before the first bit sequence and another bit is located after the first bit sequence, a value of the second bit sequence is 1011.

Alternatively, in a case where a bit value of the information sequence is 1, a value of the first bit sequence is 10, and then, P=2 bits are all located before the first bit sequence, a value of the second bit sequence is 1110; or, in a case where all P=2 bits are located in the first bit sequence, a value of the second bit sequence is 1110; or, in a case where all P=2 bits are located after the first bit sequence, a value of the second bit sequence is 1011; or, in a case where among the P=2 bits, one bit is located before the first bit sequence and another bit is located after the first bit sequence, a value of the second bit sequence is 1101.

In addition, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 5.

**Table 2**

| Information sequence | First bit sequence | Second bit sequence |
|---|---|---|
| 0 | 01 | 1101 (P=2 bits are before the first bit sequence) |
| 0 | 01 | 0111 (P=2 bits are in the first bit sequence) |
| 0 | 01 | 0111 (P=2 bits are after the first bit sequence) |
| 0 | 01 | 1011 (One bit is before the first bit sequence, and another bit is after the first bit sequence) |
| 1 | 10 | 1110 (P=2 bits are before the first bit sequence) |
| 1 | 10 | 1110 (P=2 bits are in the first bit sequence) |
| 1 | 10 | 1011 (P=2 bits are after the first bit sequence) |
| 1 | 10 | 1101 (One bit is before the first bit sequence, and another bit is after the first bit sequence) |

Example 21: taking the first signal as shown in the above FIG. 6 as an example, K=1, P=1, and K1=4. The information sequence with a length of K=1 bit may be mapped to a first bit sequence with a length of K1=4 based on a preset mapping scheme, and P=1 bit is added to the first bit sequence to obtain a second bit sequence, where the P=1 bit sequence is 1. Exemplarily, the first bit sequence and the second bit sequence may be shown in Table 3 below, and when a bit value of the information sequence is 0, and a value of the first bit sequence is 0101, then, in a case where all P=1 bit is located before the first bit sequence, a value of the second bit sequence is 10101, or, in a case where all P=1 bit is located in the first bit sequence, a value of the second bit sequence is 01101, or, in a case where all P=1 bit is located after the first bit sequence, a value of the second bit sequence is 01011.

Alternatively, when a bit value of the information sequence is 1, and a value of the first bit sequence is 1010, then, in a case where all P=1 bit is located before the first bit sequence, a value of the second bit sequence is 11010, or, in a case where all P=1 bit is located in the first bit sequence, a value of the second bit sequence is 10110, or, in a case where all P=1 bit is located after the first bit sequence, a value of the second bit sequence is 10101.

In addition, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 6.

**Table 3**

| Information sequence | First bit sequence | Second bit sequence |
|---|---|---|
| 0 | 0101 | 10101 (P=1 bit is before the first bit sequence) |
| 0 | 0101 | 01101 (P=1 bit is in the first bit sequence) |
| 0 | 0101 | 01011 (P=1 bit is after the first bit sequence) |
| 1 | 1010 | 11010 (P=1 bit is before the first bit sequence) |
| 1 | 1010 | 10110 (P=1 bit is in the first bit sequence) |
| 1 | 1010 | 10101 (P=1 bit is after the first bit sequence) |

Example 22: taking the first signal as shown in the above FIG. 7 as an example, K=1, P=3, and K1=2. The information sequence with a length of K=1 bit may be mapped to a first bit sequence with a length of K1=2 based on a preset mapping scheme, and P=3 bits are added to the first bit sequence to obtain a second bit sequence, where the P=3 bit sequences are 101. Exemplarily, the first bit sequence and the second bit sequence may be shown in Table 4 below, and when a bit value of the information sequence is 0, and a value of the first bit sequence is 01, then, in a case where all P=3 bits are located before the first bit sequence, a value of the second bit sequence is 10101, or, in a case where all P=3 bits are located in the first bit sequence, a value of the second bit sequence is 01011, or, in a case where all P=3 bits are located after the first bit sequence, a value of the second bit sequence is 01101.

Alternatively, when a bit value of the information sequence is 1, and a value of the first bit sequence is 10, then, in a case where all P=3 bits are located before the first bit sequence, a value of the second bit sequence is 10110, or, in a case where all P=3 bits are located in the first bit sequence, a value of the second bit sequence is 11010, or, in a case where all P=3 bits are located after the first bit sequence, a value of the second bit sequence is 10101.

In addition, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 7.

**Table 4**

| Information sequence | First bit sequence | Second bit sequence |
|---|---|---|
| 0 | 01 | 10101 (P=3 bits are before the first bit sequence) |
| 0 | 01 | 01011 (P=3 bits are in the first bit sequence) |
| 0 | 01 | 01101 (P=3 bits are after the first bit sequence) |
| 1 | 10 | 10110 (P=3 bits are before the first bit sequence) |
| 1 | 10 | 11010 (P=3 bits are in the first bit sequence) |
| 1 | 10 | 10101 (P=3 bits are after the first bit sequence) |

Example 23: K=1, P=1, and K1=4. The information sequence with a length of K=1 bit may be mapped to a first bit sequence with a length of K1=4 based on a preset mapping scheme, and P=1 bit is added to the first bit sequence to obtain a second bit sequence, where the P=1 bit sequence is 1. Exemplarily, the first bit sequence and the second bit sequence may be shown in Table 5 below, and when a bit value of the information sequence is 0, and a value of the first bit sequence is 1001, then, in a case where all P=1 bit is located before the first bit sequence, a value of the second bit sequence is 11001, or, in a case where all P=1 bit is located in the first bit sequence, a value of the second bit sequence is 10101, or, in a case where all P=1 bit is located after the first bit sequence, a value of the second bit sequence is 10011.

Alternatively, when a bit value of the information sequence is 1, and a value of the first bit sequence is 0110, then, in a case where all P=1 bit is located before the first bit sequence, a value of the second bit sequence is 10110, or, in a case where all P=1 bit is located in the first bit sequence, a value of the second bit sequence is 01110, or, in a case where all P=1 bit is located after the first bit sequence, a value of the second bit sequence is 01101.

In addition, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 9.

**Table 5**

| Information sequence | First bit sequence | Second bit sequence |
|---|---|---|
| 0 | 1001 | 11001 (P=1 bit is before the first bit sequence) |
| 0 | 1001 | 10101 (P=1 bit is in the first bit sequence) |
| 0 | 1001 | 10011 (P=1 bit is after the first bit sequence) |
| 1 | 0110 | 10110 (P=1 bit is before the first bit sequence) |
| 1 | 0110 | 01110 (P=1 bit is in the first bit sequence) |
| 1 | 0110 | 01101 (P=1 bit is after the first bit sequence) |

Example 24: K=1, P=1, and K1=4. The information sequence with a length of K=1 bit may be mapped to a first bit sequence with a length of K1=4 based on a preset mapping scheme, and P=1 bit is added to the first bit sequence to obtain a second bit sequence, where the P=1 bit sequence is 1. Exemplarily, the first bit sequence and the second bit sequence may be shown in Table 6 below, and when a bit value of the information sequence is 0, and a value of the first bit sequence is 0011, and in a case where all P=1 bit is located before the first bit sequence, the second bit sequence is 10011, or, in a case where all P=1 bit is located in the first bit sequence, the second bit sequence is 00111, or, in a case where all P=1 bit is located after the first bit sequence, the second bit sequence is 00111. When the information sequence is 1, the first bit sequence is 1100, and in a case where all P=1 bit is located before the first bit sequence, the second bit sequence is 1100, or, in a case where all P=1 bit is located in the first bit sequence, the second bit sequence is 11100, or, in a case where all P=1 bit is located after the first bit sequence, the second bit sequence is 11001. Furthermore, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 11.

**Table 6**

| Information sequence | First bit sequence | Second bit sequence |
|---|---|---|
| 0 | 0011 | 10011 (P=1 bit is before the first bit sequence) |
| 0 | 0011 | 00111 (P=1 bit is in the first bit sequence) |
| 0 | 0011 | 00111 (P=1 bit is after the first bit sequence) |
| 1 | 1100 | 11100 (P=1 bit is before the first bit sequence) |
| 1 | 1100 | 11100 (P=1 bit is in the first bit sequence) |
| 1 | 1100 | 11001 (P=1 bit is after the first bit sequence) |

Example 25: K=1, P=2, and K1=6. The information sequence with a length of K=1 bit may be mapped to a first bit sequence with a length of K1=6 based on a preset mapping scheme, and P=2 bits are added to the first bit sequence to obtain a second bit sequence, where the P=2 bit sequences are 11. For example, the first bit sequence and the second bit sequence may be shown in Table 7 below, and when the information sequence is 0, the first bit sequence is 101100, and in a case where all P=2 bits are located in the first bit sequence, the second bit sequence may be 10110110. When the information sequence is 1, the first bit sequence is 110100, and in a case where all P=2 bits are located in the first bit sequence, the second bit sequence may be 11010110. Furthermore, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, the generated first signal may be shown in the above FIG. 13.

**Table 7**

| Information sequence | First bit sequence | Second bit sequence |
|---|---|---|
| 0 | 101100 | 10110110 |
| 1 | 110100 | 11010110 |

In some embodiments, the value of K may also be greater than 1. Moreover, the following provides exemplary descriptions for this embodiment by Example 26 to Example 29.

Example 26: K=2, P=2, and the bit value of the information sequence may include 00, 01, 10, or 11. The information sequence may be mapped to a first bit sequence with K1=4 based on a preset mapping scheme. Moreover, P=2 bits are added to the first bit sequence to obtain a second bit sequence. The P=2 bit sequences are 11, and the P=2 bits may be divided into two parts, located before the first bit sequence and after the first bit sequence, respectively. The first bit sequence and the second bit sequence are as shown in Table 8 below. When the bit value of the information sequence is 00, the value of the first bit sequence is 0101, and the value of the second bit sequence is 101011. Alternatively, when the bit value of the information sequence is 01, the value of the first bit sequence is 0110, and the value of the second bit sequence is 101101. Alternatively, when the bit value of the information sequence is 10, the value of the first bit sequence is 1001, and the value of the second bit sequence is 110011. Alternatively, when the bit value of the information sequence is 11, the value of the first bit sequence is 1010, and the value of the second bit sequence is 110101. Furthermore, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, and the generated first signal may be shown in the above FIG. 14.

**Table 8**

| Information sequence | First bit sequence | Second bit sequence |
|---|---|---|
| 00 | 0101 | 101011 |
| 01 | 0110 | 101101 |
| 10 | 1001 | 110011 |
| 11 | 1010 | 110101 |

Example 27: K=2, and a first bit sequence is determined from the information sequence with K=2 based on a Walsh code (Walsh) coding scheme with a length of 8 (i.e., K1=8). Then, a second bit sequence is formed by the first bit sequence and additional P=2 bits, where P=2 bit sequences are 11. P=2 bits may be all located before, or in, or after the first bit sequence; or may be divided into multiple parts respectively located before, or in, or after the first bit sequence. The first bit sequence and the second bit sequence are as shown in Table 9, and taking a case where P=2 bits are all located after the first bit sequence as an example: when a bit value of the information sequence is 00, the value of the first bit sequence is 01010101, and the value of the second bit sequence is 0101010111. Alternatively, when a bit value of the information sequence is 01, the value of the first bit sequence is 01100110, and the value of the second bit sequence is 0110011011. Alternatively, when a bit value of the information sequence is 10, the value of the first bit sequence is 01011010, and the value of the second bit sequence is 0101101011. Alternatively, when a bit value of the information sequence is 11, the value of the first bit sequence is 01101001, and the value of the second bit sequence is 0110100111. Furthermore, the second bit sequence is mapped bit-by-bit to high-level/low-level pulses with a width of PW, that is, in the second bit sequence, a bit 0 is mapped to a low-level pulse with a width of PW, and a bit 1 is mapped to a high-level pulse with a width of PW, to obtain the first signal, and the first signal may be shown in FIG. 15 above.

**Table 9**

| Information sequence | First bit sequence | Second bit sequence |
|---|---|---|
| 00 | 01010101 | 0101010111 |
| 01 | 01100110 | 0110011011 |
| 10 | 01011010 | 0101101011 |
| 11 | 01101001 | 0110100111 |

Example 28: K=2, and a first bit sequence with K1=6 is determined from the information sequence with K=2 based on a preset mapping scheme. Then, a second bit sequence is formed by the first bit sequence and additional P=2 bits, where P=2 bit sequences are 11. P=2 bits may be all located before, or in, or after the first bit sequence; or may be divided into multiple parts respectively located before, or in, or after the first bit sequence. The first bit sequence and the second bit sequence are as shown in Table 10, and taking a case where P=2 bits are divided into 2 parts, respectively located before the first bit sequence and after the first bit sequence as an example: when a bit value of the information sequence is 00, the value of the first bit sequence is 100111, and the value of the second bit sequence is 11001111. Alternatively, when a bit value of the information sequence is 01, the value of the first bit sequence is 111001, and the value of the second bit sequence is 11110011. Alternatively, when a bit value of the information sequence is 10, the value of the first bit sequence is 010100, and the value of the second bit sequence is 10101001. Alternatively, when a bit value of the information sequence is 11, the value of the first bit sequence is 001010, and the value of the second bit sequence is 10010101. Furthermore, the second bit sequence is mapped bit-by-bit to high-level/low-level pulses with a width of PW, that is, in the second bit sequence, a bit 0 is mapped to a low-level pulse with a width of PW, and a bit 1 is mapped to a high-level pulse with a width of PW, to obtain the first signal, and the first signal may be shown in FIG. 16 above.

**Table 10**

| Information sequence | First bit sequence | Second bit sequence |
|---|---|---|
| 00 | 100111 | 11001111 |
| 01 | 111001 | 11110011 |
| 10 | 010100 | 10101001 |
| 11 | 001010 | 10010101 |

Example 29: K=2, and a first bit sequence with K1=8 is determined from the information sequence with K=2 based on a preset mapping scheme. Then, a second bit sequence is formed by the first bit sequence and additional P=3 bits, where P=3 bit sequences are 110. P=3 bits may be all located before, or in, or after the first bit sequence; or may be divided into multiple parts respectively located before, or in, or after the first bit sequence. The first bit sequence and the second bit sequence are as shown in Table 11, and taking a case where P=3 bits are all located after the first bit sequence as an example: when a bit value of the information sequence is 00, the value of the first bit sequence is 11111110, and the value of the second bit sequence is 11111110110. Alternatively, when a bit value of the information sequence is 01, the value of the first bit sequence is 11111100, and the value of the second bit sequence is 11111100110. Alternatively, when a bit value of the information sequence is 10, the value of the first bit sequence is 11111000, and the value of the second bit sequence is 11111000110. Alternatively, when a bit value of the information sequence is 11, the value of the first bit sequence is 11110000, and the value of the second bit sequence is 11110000110. Furthermore, the second bit sequence is mapped bit-by-bit to high-level/low-level pulses with a width of PW, that is, in the second bit sequence, a bit 0 is mapped to a low-level pulse with a width of PW, and a bit 1 is mapped to a high-level pulse with a width of PW, to obtain the first signal, and the first signal may be shown in FIG. 17 above.

**Table 11**

| Information sequence | First bit sequence | Second bit sequence |
|---|---|---|
| 00 | 11111110 | 11111110110 |
| 01 | 11111100 | 11111100110 |
| 10 | 11111000 | 11111000110 |
| 11 | 11110000 | 11110000110 |

In some embodiments, for different information sequences, the lengths of the corresponding generated first bit sequences may also be different. Moreover, the following provides exemplary descriptions for this embodiment by Example 30 and Example 31.

Example 30: K=1, and a first bit sequence with a length of K1 is determined from the information sequence with K=1 based on a preset mapping scheme, where the value of K1 may be 4, 6, or other possible values. Then, a second bit sequence is formed by the first bit sequence and additional P=1 bit, where P=1 bit sequence is 1. P=1 bit may all be located before, or in, or after the first bit sequence. The first bit sequence and the second bit sequence are as shown in Table 12, and taking a case where P=1 bit is all located before the first bit sequence as an example, the bit value of the information sequence is 0, the value of the first bit sequence is 1001, and the value of the second bit sequence is 11001. Alternatively, the bit value of the information sequence is 1, the value of the first bit sequence is 011011, and the value of the second bit sequence is 1011011. It can be seen that different bit values of the information sequence correspond to different lengths of the first bit sequence, and then, the corresponding second bit sequences also have different lengths. Furthermore, the second bit sequence is mapped bit-by-bit to high-level/low-level pulses with a width of PW, that is, in the second bit sequence, a bit 0 is mapped to a low-level pulse with a width of PW, and a bit 1 is mapped to a high-level pulse with a width of PW, to obtain the first signal, and the first signal may be shown in FIG. 18 above, and for different information sequences, the lengths of the corresponding generated first signal may also be different.

**Table 12**

| Information sequence | First bit sequence | Second bit sequence |
|---|---|---|
| 0 | 1001 | 11001 |
| 1 | 011011 | 1011011 |

Example 31: K=2, and a first bit sequence with a length of K1 is determined from the information sequence with K=2 based on a preset mapping scheme, and the value of K1 may be determined based on the bit value of the information sequence. Then, a second bit sequence is formed by the first bit sequence and additional P=3 bits. The first bit sequence and the second bit sequence are as shown in Table 13, and taking a case where P=3 bits are all located after the first bit sequence as an example, P=3 bit sequences are 110. When a bit value of the information sequence is 00, the value of the first bit sequence is 1010, and the value of the second bit sequence is 1010110. Alternatively, when a bit value of the information sequence is 01, the value of the first bit sequence is 10110 and the value of the second bit sequence is 10110110. Alternatively, when a bit value of the information sequence is 10, the value of the first bit sequence is 11010, and the value of the second bit sequence is 11010110. Alternatively, when a bit value of the information sequence is 11, the value of the first bit sequence is 110110, and the value of the second bit sequence is 110110110. It can be seen that different bit values of the information sequence correspond to different lengths of the first bit sequence, and then, the corresponding second bit sequences also have different lengths. Furthermore, the second bit sequence is mapped bit-by-bit to high-level/low-level pulses with a width of PW, that is, in the second bit sequence, a bit 0 is mapped to a low-level pulse with a width of PW, and a bit 1 is mapped to a high-level pulse with a width of PW, to obtain the first signal. The first signal may be shown in FIG. 19 above, and for different information sequences, the lengths of the corresponding generated second signal may also be different.

**Table 13**

| Information sequence | First bit sequence | Second bit sequence |
|---|---|---|
| 00 | 1010 | 1010110 |
| 01 | 10110 | 10110110 |
| 10 | 11010 | 11010110 |
| 11 | 110110 | 110110110 |

In some embodiments, in the process of generating the first signal based on the second bit sequence through the preset waveform coding scheme or mapping scheme, the waveform width corresponding to the first bit sequence is the same as the waveform width corresponding to the additional P bits.

In some embodiments, the waveform width corresponding to the first bit sequence may be different from the waveform width corresponding to the additional P bits. Moreover, the following provides exemplary descriptions for this embodiment by Example 32 to Example 34.

Example 32: K=1, K1=2, a second bit sequence is formed by the first bit sequence and additional P=1 bit, where P=1 bit sequence is 1. P=1 bit may all be located before, or in, or after the first bit sequence, and the first signal is obtained by mapping based on the second bit sequence according to the preset mapping scheme. In the second bit sequence, P=1 bit is mapped to a high-level pulse with a width of PW; in the second bit sequence, bit 1 belonging to the first bit sequence is mapped to a high-level pulse with a width of PW', and bit 0 belonging to the first bit sequence is mapped to a low-level pulse with a width of PW', where PW>PW'. The first bit sequence and the second bit sequence are as shown in Table 1, and when the bit value of the information sequence is 0, the value of the first bit sequence is 01, and then, in a case where P=1 bit is all located before the first bit sequence, the value of the second bit sequence is 101, or in a case where the P=1 bit is all located in the first bit sequence, the value of the second bit sequence is 011, or in a case where the P=1 bit is all located after the first bit sequence, the value of the second bit sequence is 011. Alternatively, when a bit value of the information sequence is 1, a value of the first bit sequence is 10, and then, in a case where P=1 bit is all located before the first bit sequence, a value of the second bit sequence is 110, or in a case where P=1 bit is all located in the first bit sequence, a value of the second bit sequence is 110, or in a case where P=1 bit is all located after the first bit sequence, a value of the second bit sequence is 101. In addition, the first signal obtained based on the second bit sequence may be shown in the above FIG. 20.

Example 33: K=1, K1=4, a second bit sequence is formed by the first bit sequence and additional P=1 bit, where P=1 bit sequence is 1. Taking a case where P=1 bit is all located before the first bit sequence as an example, the first signal is obtained by mapping based on the second bit sequence according to the preset mapping scheme. In the second bit sequence, P=1 bit is mapped to a high-level pulse with a width of PW; in the second bit sequence, bit 1 belonging to the first bit sequence is mapped to a high-level pulse with a width of PW', and bit 0 belonging to the first bit sequence is mapped to a low-level pulse with a width of PW', where PW>PW'. The first bit sequence and the second bit sequence are as shown in Table 14, and taking a case where P=1 bit is all located before the first bit sequence as an example, when the bit value of the information bit is 0, the bit value of the first bit sequence is 1001, and the bit value of the second bit sequence is 11001. Alternatively, when the bit value of the information bit is 1, the bit value of the first bit sequence is 0110, and the bit value of the second bit sequence is 10110. In addition, the first signal obtained based on the second bit sequence may be shown in the above FIG. 22.

**Table 14**

| Information sequence | First bit sequence | Second bit sequence |
|---|---|---|
| 0 | 1001 | 11001 |
| 1 | 0110 | 10110 |

Example 34: K=2, a second bit sequence is formed by the first bit sequence and additional P=3 bits, where P=3 bit sequences are 110. Taking a case where P=3 bits are all located after the first bit sequence as an example, the first signal is obtained by mapping based on the second bit sequence according to the preset mapping scheme. In the second bit sequence, bit 1 among the P=3 bits is mapped to a high-level pulse with a width of PW, and bit 0 among the P=3 bits is mapped to a low-level pulse with a width of PW. In the second bit sequence, bit 0 belonging to the first bit sequence is mapped to a low-level pulse with a width of PW0; a single bit 1 belonging to the first bit sequence is mapped to a high-level pulse with a width of PW1; and two consecutive bits 1 belonging to the first bit sequence are collectively mapped to a high-level pulse with a width of PW2, where PW>PW2>PW1≥PW0. The first bit sequence and the second bit sequence are as shown in Table 15, taking a case where the P=3 bits are all located after the first bit sequence as an example, and when the bit value of the information bit is 00, the bit value of the first bit sequence is 1010, and the bit value of the second bit sequence is 1010110. Alternatively, when the bit value of the information bit is 01, the bit value of the first bit sequence is 10110, and the bit value of the second bit sequence is 10110110. Alternatively, when the bit value of the information bit is 10, the bit value of the first bit sequence is 11010, and the bit value of the second bit sequence is 11010110. Alternatively, when the bit value of the information bit is 11, the bit value of the first bit sequence is 110110, and the bit value of the second bit sequence is 110110110. In addition, the first signal obtained based on the second bit sequence may be shown in FIG. 23 above.

**Table 15**

| Information sequence | First bit sequence | Second bit sequence |
|---|---|---|
| 00 | 1010 | 1010110 |
| 01 | 10110 | 10110110 |
| 10 | 11010 | 11010110 |
| 11 | 110110 | 110110110 |

In some embodiments, for different information sequences, the added P bits may be located at different positions in their first bit sequence. Moreover, the following provides exemplary descriptions for this embodiment by Example 35 and Example 36.

Example 35: the information sequence with K=1 bit is mapped to a first bit sequence with K1=5 according to a preset mapping scheme, and P bits are added to the first bit sequence to form a second bit sequence, where P is a positive integer. Furthermore, the second bit sequence is mapped bit-by-bit to a high-level/low-level pulse with a width of PW, that is, in the second bit sequence, bit 0 is mapped to a low-level pulse with a width of PW, and bit 1 is mapped to a high-level pulse with a width of PW, to obtain the first signal, and the first signal may be shown in the above FIG. 25A to FIG. 25F. The first bit sequence and the second bit sequence are respectively shown in Table 16, and when the information sequence is 0, the first bit sequence is 10110; or when the information sequence is 1, the first bit sequence is 11010. Furthermore, P bits are added to the first bit sequence to form a second bit sequence.

Corresponding to the above FIG. 25A, P=1 and P=1 bit is 1, and when the information sequence is 0 and in a case where P=1 bit is added after the 4th bit of the first bit sequence, the obtained second bit sequence is 101110. Alternatively, when the information sequence is 1 and in a case where P=1 bit is added after the 2nd bit of the first bit sequence, the obtained second bit sequence is 111010.

Corresponding to the above FIG. 25B, P=2 and P=2 bits are 11, and when the information sequence is 0 and in a case where P=2 bits are added after the 4th bit of the first bit sequence, the obtained second bit sequence is 1011110. Alternatively, when the information sequence is 1 and in a case where P=2 bits are added after the 2nd bit of the first bit sequence, the obtained second bit sequence is 1111010.

Corresponding to the above FIG. 25C, P=3 and P=3 bits are 111, and when the information sequence is 0 and in a case where 1 bit and 2 bits are added respectively after the 1st bit and the 4th bit of the first bit sequence, the obtained second bit sequence is 11011110. Alternatively, when the information sequence is 1 and in a case where 2 bits and 1 bit are added respectively after the 2nd bit and the 4th bit of the first bit sequence, the obtained second bit sequence is 11110110.

Corresponding to the above FIG. 25D, P=6 and P=6 bits are all 1, and when the information sequence is 0 and in a case where 2 bits and 4 bits are added respectively after the 1st bit and the 4th bit of the first bit sequence, the obtained second bit sequence is 11101111110. Alternatively, when the information sequence is 1 and in a case where 4 bits and 2 bits are added respectively after the 2nd bit and the 4th bit of the first bit sequence, the obtained second bit sequence is 11111101110.

Corresponding to the above FIG. 25E, P=4 and P=4 bits are 1010, and when the information sequence is 0 and in a case where bits 10 and bits 10 are added respectively after the 1st bit and the 4th bit of the first bit sequence, the obtained second bit sequence is 110011100. Alternatively, when the information sequence is 1 and in a case where bits 10 and bits 10 are added respectively after the 2nd bit and the 4th bit of the first bit sequence, the obtained second bit sequence is 111001100.

Corresponding to the above FIG. 25F, P=5 and P=5 bits are 10110, and when the information sequence is 0 and in a case where bits 10 and bits 110 are added respectively after the 1st bit and the 4th bit of the first bit sequence, the obtained second bit sequence is 1100111100. Alternatively, when the information sequence is 1 and in a case where bits 110 and bits 10 are added respectively after the 2nd bit and the 4th bit of the first bit sequence, the obtained second bit sequence is 1111001100.

**Table 16**

| Information sequence | | 0 | 1 |
|---|---|---|---|
| First bit sequence | | 10110 | 11010 |
| Second bit sequence | P=1 | 101110 | 111010 |
| | P=2 | 1011110 | 1111010 |
| | P=3 | 11011110 | 11110110 |
| | P=6 | 11101111110 | 11111101110 |
| | P=4 | 110011100 | 111001100 |
| | P=5 | 1100111100 | 1111001100 |

Example 36: the information sequence with K=1 bit is mapped to a first bit sequence with K1=5, 6, or other possible values, according to a preset mapping scheme, that is, first bit sequences corresponding to different information sequences may have different lengths. Moreover, P bits are added to the first bit sequence to form a second bit sequence, where P is a positive integer. Furthermore, the second bit sequence is mapped bit-by-bit to high-level/low-level pulses with a width of PW, that is, in the second bit sequence, bit 0 is mapped to a low-level pulse with a width of PW, and bit 1 is mapped to a high-level pulse with a width of PW, to obtain the first signal, and the first signal may be shown in the above FIG. 27A and FIG. 27B. The first bit sequence and the second bit sequence are respectively as shown in Table 17, and when the information sequence is 0, the first bit sequence is 10110, with a length K1=5; or when the information sequence is 1, the first bit sequence is 111010, with a length K1=6. Furthermore, P bits are added to the first bit sequence to form a second bit sequence.

Corresponding to the above FIG. 27A, P=1 and P=1 bit is 1, and when the information sequence is 0 and in a case where P=1 bit is added after the 4th bit of the first bit sequence, the obtained second bit sequence is 101110, with a length of 6 bits. When the information sequence is 1 and in a case where P=1 bit is added after the 3rd bit of the first bit sequence, the obtained second bit sequence is 1111010, with a length of 7 bits.

Corresponding to the above FIG. 27B, P=2 and P=2 bits are 10, and when the information sequence is 0 and in a case where 2 bits 10 are added after the 4th bit of the first bit sequence, the obtained second bit sequence is 1011100, with a length of 7 bits. When the information sequence is 1 and in a case where bits 10 are added after the 3rd bit of the first bit sequence, the obtained second bit sequence is 11110010, with a length of 8 bits.

**Table 17**

| Information sequence | First bit sequence | Second bit sequence (P=1) | Second bit sequence (P=2) |
|---|---|---|---|
| 0 | 10110 | 101110 | 1011100 |
| 1 | 111010 | 1111010 | 11110010 |

In S102: the first signal is sent.

Correspondingly, after receiving the first signal, the receiving side may use the high-level in the signal for charging, and simultaneously detect the information bits represented in the received signal by using the part belonging to the second signal or the first bit sequence in the first signal.

It should be noted that, taking the system shown in FIG. 1 as an example, the information transmission method that may be used for the reader-writer (reader) to tag link is a pulse interval encoding (PIE) scheme. As shown in FIG. 29, the transmission signal corresponding to a bit value of 0 is formed by a high-level pulse and a low-level pulse with equal widths, and the width of the low-level pulse may be PW (Pulse Width). The transmission signal corresponding to a bit value of 1 is formed by a high-level pulse and a low-level pulse with unequal widths, and the width of the low-level pulse is PW, and the width of the high-level pulse may be 2PW to 3PW. In a case where bit 0 and bit 1 have an equal probability, the high-level ratio per transmission signal is 3/5 to 2/3. With different width characteristics of the high-level pulses in the respective transmission signals of bit 0 and bit 1, the passive tag may perform bit decision according to the width of the received high-level pulse. Moreover, since there is a high-level pulse in the transmission signals of both bit 0 and bit 1, the radio frequency signal sent from the reader can always maintain a certain amount of energy.

For example, let the waveform length of bit 0 as *Tₛ* = 2*PW,* the widths of the high-level pulse and the low-level pulse are both 0.5*Tₛ = PW,* thus the waveform length of bit 1 is (1 + *α*)*Tₛ* (0.5 ≤ α ≤ 1), where α is a ratio coefficient. The amplitude value of the high-level is A, and the amplitude value of the low-level is 0, then the transmission signal of bit 0 has energy ${E}_{0} = \frac{1}{2} {A}^{2} {T}_{s}$, and the transmission signal of bit 1 has energy E₁ = A²(1 + *α* - 0.5)*Tₛ*. Furthermore, when bits 0 and 1 have an equal probability, the transmission signal per bit has an average energy ${E}_{b}^{PIE} = \frac{1}{2} \left({E}_{0}+{E}_{1}\right) = {A}^{2} {T}_{s} \left(\frac{1 + α}{2}\right) ∈ \left[\frac{3}{4}, 1\right] {A}^{2} {T}_{s}$. Therefore, this information transmission method can ensure providing energy for the passive tag while performing the data transmission.

Furthermore, in the PIE coding, the average length of the transmission signal per bit is ${T}_{b}^{PIE} = \left[\frac{5}{4}, \frac{3}{2}\right] {T}_{s}$ , thus, within a length range of each transmission signal, the average power consumption of the transmission signal per bit is ${\overline{P}}_{b}^{PIE} = {E}_{b}^{PIE} / {T}_{b}^{PIE} = \left[\frac{3}{5}, \frac{2}{3}\right] {A}^{2}$, and it is easy to know that this value is positively proportional to the high-level ratio per transmission signal in PIE coding. Therefore, in the present disclosure, the energy supply capability of the information transmission method may be improved to a certain extent, by changing the high-level ratio in the first signal.

Based on the solutions provided in the present disclosure, a signal generated based on an information sequence may be sent, and a signal formed by a high-level pulse and a low-level pulse is generated. Based on the signal, energy may be provided to a passive terminal on the receiving side while information is sent. In addition, different ratios of the high-level pulse and the low-level pulse in the signal may be used to measure the energy supply capability of the signal, thereby improving the energy supply capability by controlling the ratio of the high-level pulse and the low-level pulse in the signal.

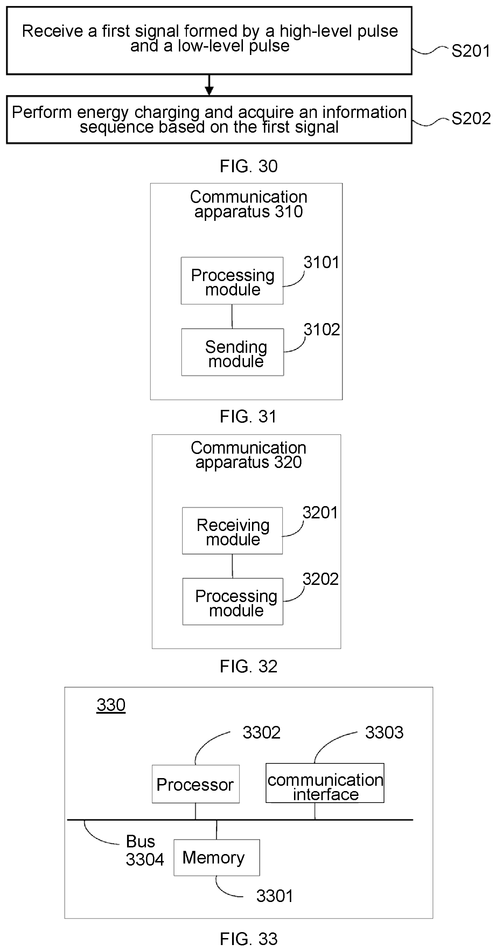

In some embodiments, as shown in FIG. 30, the present disclosure also provides an information receiving method, and the information receiving method includes S201 and S202.

In S201: a first signal formed by a high-level pulse and a low-level pulse is received.

In some embodiments, the length of the information sequence is determined according to one of: being preset, or being configured via signaling.

In an implementation, the first signal is obtained by adding M units of high-level pulses and N units of low-level pulses to a second signal. The second signal is a signal generated based on an information sequence and formed by a high-level pulse and a low-level pulse, different features of the second signal correspond to different information sequences, M is an integer greater than or equal to 1, N is an integer greater than or equal to 0, and M is greater than N.

In some embodiments, a pulse width of a unit of high-level pulse and a pulse width of a unit of low-level pulse are determined according to one of: a preset pulse width value, or being configured via signaling.

In some embodiments, the second signal is generated based on the information sequence through a preset waveform coding scheme or mapping scheme.

In some embodiments, in the first signal, the M units of high-level pulses satisfy at least one of: M₁ units of high-level pulses being located before a first pulse in the second signal, M₂ units of high-level pulses being located after a last pulse in the second signal, M₃ units of high-level pulses being located in the second signal. M₁, M₂, and M₃ are all integers less than or equal to M, and a sum of M₁, M₂, and M₃ is equal to M.

In some embodiments, in the first signal, the N units of low-level pulses satisfy at least one of: N₁ units of low-level pulses being located before a first pulse in the second signal, N₂ units of low-level pulses being located after a last pulse in the second signal, N₃ units of low-level pulses being located in the second signal. N₁, N₂, and N₃ are all integers less than or equal to N, and a sum of N₁, N₂, and N₃ is equal to N.

In some embodiments, different features of the second signal correspond to different information sequences, including at least one of: different lengths of the second signal correspond to different information sequences, different combination orders of the high-level pulse and the low-level pulse in the second signal correspond to different information sequences, different width combinations of the high-level pulse and/or the low-level pulse in the second signal correspond to different information sequences, different widths of the high-level pulse and/or the low-level pulse in the second signal correspond to different values of a bit in the information sequence, different width ratios between two consecutive high-level pulses in the second signal correspond to different values of a bit in the information sequence, different width ratios between two consecutive low-level pulses in the second signal correspond to different values of a bit in the information sequence, different width ratios between a high-level pulse and a low-level pulse that are consecutive in the second signal correspond to different values of a bit in the information sequence.

In some embodiments, the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively.

In another implementation, the first signal is generated from a second bit sequence obtained by adding P bits to a first bit sequence. The first bit sequence is generated based on the information sequence, and P is a positive integer.

In some embodiments, the first bit sequence is generated based on the information sequence through a preset coding scheme or mapping scheme.

In some embodiments, the first signal is generated based on the second bit sequence through a preset waveform coding scheme or mapping scheme.

In some embodiments, in the second bit sequence, the P bits satisfy at least one of: P₁ bits being located before the first bit sequence, P₂ bits being located after the first bit sequence, P₃ bits being located in the first bit sequence. P₁, P₂, and P₃ are all integers less than or equal to P, and a sum of P₁, P₂, and P₃ is equal to P.

In some embodiments, different features of the first signal correspond to different second bit sequences, including at least one of: different lengths of the first signal correspond to different second bit sequences, different combination orders of the high-level pulse and the low-level pulse in the first signal correspond to different second bit sequences, different width combinations of the high-level pulse and the low-level pulse in the first signal correspond to different second bit sequences, different widths of the high-level pulse and the low-level pulse in the first signal correspond to different values of a bit in the second bit sequence, different width ratios between two consecutive high-level pulses in the first signal correspond to different values of a bit in the second bit sequence, different width ratios between two consecutive low-level pulses in the first signal correspond to different values of a bit in the second bit sequence, different width ratios between a high-level pulse and a low-level pulse that are consecutive in the first signal correspond to different values of a bit in the second bit sequence.

In some embodiments, the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively.

In S202: energy charging is performed and an information sequence is acquired based on the first signal.

After receiving the first signal, the receiving side may use the high-level in the signal for charging, and simultaneously, detect the information bits represented in the received signal by using the part belonging to the second signal or the first bit sequence in the first signal.

Detailed descriptions for S201 and S202 may also refer to the related descriptions in the above S101 and S102, which are not repeated here.

The above introduces the solutions provided in the present disclosure mainly from the perspective of interaction between various nodes. It can be understood that, in order to implement the above functions, the various nodes (e.g., apparatuses or devices) contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on the specific applications and design constraint conditions of the technical solution. Professional technicians may use different methods to implement the described functions, for each specific application, but this implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions in actual implementations. The following is an example of dividing each functional module corresponding to each function.

FIG. 31 is a composition schematic diagram of a communication apparatus according to the embodiments of the present disclosure. As shown in FIG. 31, the communication apparatus 310 includes: a processing module 3101 and a sending module 3102.

In some embodiments, the processing module 3101 is configured to generate a first signal formed by a high-level pulse and a low-level pulse based on an information sequence. The sending module 3102 is configured to send the first signal.

In some embodiments, a length of the information sequence is determined according to one of: being preset, or being configured via signaling.

In some embodiments, the processing module 3101 is configured to, for example: generate a second signal formed by a high-level pulse and a low-level pulse based on the information sequence; where different features of the second signal correspond to different information sequences; and generate the first signal by adding M units of high-level pulses and N units of low-level pulses to the second signal. M is an integer greater than or equal to 1, N is an integer greater than or equal to 0, and M is greater than N.

In some embodiments, a pulse width of a unit of high-level pulse and a pulse width of a unit of low-level pulse are determined according to one of: a preset pulse width value, or being configured via signaling.

In some embodiments, the second signal is generated based on the information sequence through a preset waveform coding scheme or mapping scheme.

In some embodiments, in the first signal, the M units of high-level pulses satisfy at least one of: M₁ units of high-level pulses being located before a first pulse in the second signal; M₂ units of high-level pulses being located after a last pulse in the second signal; M₃ units of high-level pulses being located in the second signal. M₁, M₂, and M₃ are all integers less than or equal to M, and a sum of M₁, M₂, and M₃ is equal to M.

In some embodiments, in the first signal, the N units of low-level pulses satisfy at least one of: N₁ units of low-level pulses being located before a first pulse in the second signal; N₂ units of low-level pulses being located after a last pulse in the second signal; N₃ units of low-level pulses being located in the second signal. N₁, N₂, and N₃ are all integers less than or equal to N, and a sum of N₁, N₂, and N₃ is equal to N.

In some embodiments, different features of the second signal correspond to different information sequences, including at least one of: different lengths of the second signal correspond to different information sequences; different combination orders of the high-level pulse and the low-level pulse in the second signal correspond to different information sequences; different width combinations of the high-level pulse and/or the low-level pulse in the second signal correspond to different information sequences; different widths of the high-level pulse and/or the low-level pulse in the second signal correspond to different values of a bit in the information sequence; different width ratios between two consecutive high-level pulses in the second signal correspond to different values of a bit in the information sequence; different width ratios between two consecutive low-level pulses in the second signal correspond to different values of a bit in the information sequence; different width ratios between a high-level pulse and a low-level pulse that are consecutive in the second signal correspond to different values of a bit in the information sequence.

In some embodiments, the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively.

In some embodiments, the processing module 3101 is, for example, configured to: generate a first bit sequence based on the information sequence; generate a second bit sequence by adding P bits to the first bit sequence, where P is a positive integer; and generate the first signal based on the second bit sequence.

In some embodiments, the first bit sequence is generated based on the information sequence through a preset coding scheme or mapping scheme.

In some embodiments, the first signal is generated based on the second bit sequence through a preset waveform coding scheme or mapping scheme.

In some embodiments, in the second bit sequence, the P bits satisfy at least one of: P₁ bits being located before the first bit sequence; P₂ bits being located after the first bit sequence; P₃ bits being located in the first bit sequence. P₁, P₂, and P₃ are all integers less than or equal to P, and a sum of P₁, P₂, and P₃ is equal to P.

In some embodiments, different features of the first signal correspond to different second bit sequences, including at least one of: different lengths of the first signal correspond to different second bit sequences; different combination orders of the high-level pulse and the low-level pulse in the first signal correspond to different second bit sequences; different width combinations of the high-level pulse and the low-level pulse in the first signal correspond to different second bit sequences; different widths of the high-level pulse and the low-level pulse in the first signal correspond to different values of a bit in the second bit sequence; different width ratios between two consecutive high-level pulses in the first signal correspond to different values of a bit in the second bit sequence; different width ratios between two consecutive low-level pulses in the first signal correspond to different values of a bit in the second bit sequence; different width ratios between a high-level pulse and a low-level pulse that are consecutive in the first signal correspond to different values of a bit in the second bit sequence.

In some embodiments, the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively.

For more detailed descriptions of the above processing module 3101 and sending module 3102, more detailed descriptions of each technical feature, and descriptions of beneficial effects, etc., reference may be made to the corresponding method embodiment parts above, which are not repeated here.

FIG. 32 is a composition schematic diagram of a communication apparatus according to the embodiments of the present disclosure. As shown in FIG. 32, the communication apparatus 320 includes a receiving module 3201 and a processing module 3202.

In some embodiments, the receiving module 3201 is configured to receive a first signal formed by a high-level pulse and a low-level pulse. The processing module 3202 is configured to perform energy charging and acquire an information sequence based on the first signal.

In some embodiments, a length of the information sequence is determined according to one of: being preset, or being configured via signaling.

In some embodiments, the first signal is obtained by adding M units of high-level pulses and N units of low-level pulses to a second signal. The second signal is a signal generated based on the information sequence and formed by a high-level pulse and a low-level pulse, different features of the second signal correspond to different information sequences. M is an integer greater than or equal to 1, N is an integer greater than or equal to 0, and M is greater than N.

In some embodiments, a pulse width of a unit of high-level pulse and a pulse width of a unit of low-level pulse are determined according to one of: a preset pulse width value, or being configured via signaling.

In some embodiments, the second signal is generated based on the information sequence through a preset waveform coding scheme or mapping scheme.

In some embodiments, in the first signal, the M units of high-level pulses satisfy at least one of: M₁ units of high-level pulses being located before a first pulse in the second signal; M₂ units of high-level pulses being located after a last pulse in the second signal; M₃ units of high-level pulses being located in the second signal. M₁, M₂, and M₃ are all integers less than or equal to M, and a sum of M₁, M₂, and M₃ is equal to M.

In some embodiments, in the first signal, the N units of low-level pulses satisfy at least one of: N₁ units of low-level pulses being located before a first pulse in the second signal; N₂ units of low-level pulses being located after a last pulse in the second signal; N₃ units of low-level pulses being located in the second signal. N₁, N₂, and N₃ are all integers less than or equal to N, and a sum of N₁, N₂, and N₃ is equal to N.

In some embodiments, different features of the second signal correspond to different information sequences, including at least one of: different lengths of the second signal correspond to different information sequences; different combination orders of the high-level pulse and the low-level pulse in the second signal correspond to different information sequences; different width combinations of the high-level pulse and/or the low-level pulse in the second signal correspond to different information sequences; different widths of the high-level pulse and/or the low-level pulse in the second signal correspond to different values of a bit in the information sequence; different width ratios between two consecutive high-level pulses in the second signal correspond to different values of a bit in the information sequence; different width ratios between two consecutive low-level pulses in the second signal correspond to different values of a bit in the information sequence; different width ratios between a high-level pulse and a low-level pulse that are consecutive in the second signal correspond to different values of a bit in the information sequence.

In some embodiments, the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively.

In some embodiments, the first signal is generated from a second bit sequence obtained by adding P bits to a first bit sequence. The first bit sequence is generated based on the information sequence, and P is a positive integer.

In some embodiments, the first bit sequence is generated based on the information sequence through a preset coding scheme or mapping scheme.

In some embodiments, the second signal is generated based on the second bit sequence through a preset waveform coding scheme or mapping scheme.

In some embodiments, in the second bit sequence, the P bits satisfy at least one of: P₁ bits being located before the first bit sequence; P₂ bits being located after the first bit sequence; P₃ bits being located in the first bit sequence. P₁, P₂, and P₃ are all integers less than or equal to P, and a sum of P₁, P₂, and P₃ is equal to P.

In some embodiments, different features of the first signal correspond to different second bit sequences, including at least one of: different lengths of the first signal correspond to different second bit sequences; different combination orders of the high-level pulse and the low-level pulse in the first signal correspond to different second bit sequences; different width combinations of the high-level pulse and the low-level pulse in the first signal correspond to different second bit sequences; different widths of the high-level pulse and the low-level pulse in the first signal correspond to different values of a bit in the second bit sequence; different width ratios between two consecutive high-level pulses in the first signal correspond to different values of a bit in the second bit sequence; different width ratios between two consecutive low-level pulses in the first signal correspond to different values of a bit in the second bit sequence; different width ratios between a high-level pulse and a low-level pulse that are consecutive in the first signal correspond to different values of a bit in the second bit sequence.

In some embodiments, the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively.

For more detailed descriptions of the above receiving module 3201 and processing module 3202, more detailed descriptions of each technical feature, and descriptions of beneficial effects, etc., reference may be made to the corresponding method embodiment parts above, which are not repeated here.

It should be noted that the modules in FIG. 31 or FIG. 32 may also be referred to as units, for example, the processing module may be referred to as a processing unit. In addition, in the embodiments shown in FIG. 31 or FIG. 32, the name of each module may also not be the name shown in the figure, for example, the receiving module may also be referred to as a communication module.

If each unit in FIG. 31 or FIG. 32 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the related technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus. As shown in FIG. 33, the communication apparatus 330 includes: a processor 3302, a communication interface 3303, and a bus 3304. In some embodiments, the communication apparatus 330 may further include a memory 3301.

The processor 3302 may implement or execute various illustrative logical blocks, modules and circuits described in conjunction with the contents of the present disclosure. The processor 3302 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 3302 may also be a combination capable of implementing computing functions, for example, including a combination of one or more microprocessors, or a combination of a digital signal processor (DSP) and a microprocessor.

The communication interface 3303 is configured to connect with other devices through a communication network. The communication network may be an Ethernet, a radio access network, a wireless local area network (WLAN), or the like.

The memory 3301 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 3301 may exist independently of the processor 3302, and the memory 3301 may be connected to the processor 3302 through the bus 3304, for storing instructions or program codes. When calling and executing the instructions or the program codes stored in the memory 3301, the processor 3302 is capable of implementing the method provided in the embodiments of the present disclosure.

In another implementation, the memory 3301 may also be integrated with the processor 3302.

The bus 3304 may be an extended industry standard architecture (EISA) bus or the like. The bus 3304 may be classified into an address bus, a data bus, and a control bus, or the like. For the convenience of representation, only one thick line is used in FIG. 33 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium (e.g., a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be or a memory of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, and the computer product contains a computer program, the computer program product, when executed on a computer, causes the computer to perform any one of the methods provided in the above embodiments.

Based on the technical solutions provided in the present disclosure, a signal formed by a high-level pulse and a low-level pulse may be generated and sent based on an information sequence. Based on the signal, energy may be provided to a passive terminal on the receiving side while information is sent. In addition, different ratios of the high-level pulse and the low-level pulse in the signal may be used to measure the energy supply capability of the signal, thereby improving the energy supply capability by controlling the ratio of the high-level pulse and the low-level pulse in the signal.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. An information transmission method, comprising:
generating a first signal formed by a high-level pulse and a low-level pulse based on an information sequence; and
sending the first signal.

2. The method according to claim 1, wherein a length of the information sequence is determined according to one of: being preset, or being configured via signaling.

3. The method according to claim 1, wherein generating the first signal formed by the high-level pulse and the low-level pulse based on the information sequence, comprises:
generating a second signal formed by a high-level pulse and a low-level pulse based on the information sequence; wherein different features of the second signal correspond to different information sequences; and
generating the first signal by adding M units of high-level pulses and N units of low-level pulses to the second signal, wherein M is an integer greater than or equal to 1, N is an integer greater than or equal to 0, and M is greater than N.

4. The method according to claim 3, wherein a pulse width of a unit of high-level pulse and a pulse width of a unit of low-level pulse are determined according to one of: a preset pulse width value, or being configured via signaling.

5. The method according to claim 3, wherein the second signal is generated based on the information sequence through a preset waveform coding scheme or mapping scheme.

6. The method according to claim 3, wherein in the first signal, the M units of high-level pulses satisfy at least one of:
M₁ units of high-level pulses being located before a first pulse in the second signal;
M₂ units of high-level pulses being located after a last pulse in the second signal;
M₃ units of high-level pulses being located in the second signal;
wherein M₁, M₂, and M₃ are all integers less than or equal to M, and a sum of M₁, M₂, and M₃ is equal to M.

7. The method according to claim 3, wherein in the first signal, the N units of low-level pulses satisfy at least one of:
N₁ units of low-level pulses being located before a first pulse in the second signal;
N₂ units of low-level pulses being located after a last pulse in the second signal;
N₃ units of low-level pulses being located in the second signal;
wherein N₁, N₂, and N₃ are all integers less than or equal to N, and a sum of N₁, N₂, and N₃ is equal to N.

8. The method according to claim 3, wherein different features of the second signal correspond to different information sequences, comprising at least one of:
different lengths of the second signal correspond to different information sequences;
different combination orders of the high-level pulse and the low-level pulse in the second signal correspond to different information sequences;
different width combinations of the high-level pulse and/or the low-level pulse in the second signal correspond to different information sequences;
different widths of the high-level pulse and/or the low-level pulse in the second signal correspond to different values of a bit in the information sequence;
different width ratios between two consecutive high-level pulses in the second signal correspond to different values of a bit in the information sequence;
different width ratios between two consecutive low-level pulses in the second signal correspond to different values of a bit in the information sequence;
different width ratios between a high-level pulse and a low-level pulse that are consecutive in the second signal correspond to different values of a bit in the information sequence.

9. The method according to claim 3, wherein the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively.

10. The method according to claim 1, wherein generating the first signal formed by the high-level pulse and the low-level pulse based on the information sequence, comprises:
generating a first bit sequence based on the information sequence;
generating a second bit sequence by adding P bits to the first bit sequence, wherein P is a positive integer; and
generating the first signal based on the second bit sequence.

11. The method according to claim 10, wherein the first bit sequence is generated based on the information sequence through a preset coding scheme or mapping scheme.

12. The method according to claim 10, wherein the first signal is generated based on the second bit sequence through a preset waveform coding scheme or mapping scheme.

13. The method according to claim 10, wherein in the second bit sequence, the P bits satisfy at least one of:
P₁ bits being located before the first bit sequence;
P₂ bits being located after the first bit sequence;
P₃ bits being located in the first bit sequence;
wherein P₁, P₂, and P₃ are all integers less than or equal to P, and a sum of P₁, P₂, and P₃ is equal to P.

14. The method according to claim 10, wherein different features of the first signal correspond to different second bit sequences, comprising at least one of:
different lengths of the first signal correspond to different second bit sequences;
different combination orders of the high-level pulse and the low-level pulse in the first signal correspond to different second bit sequences;
different width combinations of the high-level pulse and the low-level pulse in the first signal correspond to different second bit sequences;
different widths of the high-level pulse and the low-level pulse in the first signal correspond to different values of a bit in the second bit sequence;
different width ratios between two consecutive high-level pulses in the first signal correspond to different values of a bit in the second bit sequence;
different width ratios between two consecutive low-level pulses in the first signal correspond to different values of a bit in the second bit sequence;
different width ratios between a high-level pulse and a low-level pulse that are consecutive in the first signal correspond to different values of a bit in the second bit sequence.

15. The method according to claim 1, wherein the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively.

16. An information receiving method, comprising:
receiving a first signal formed by a high-level pulse and a low-level pulse; and
performing energy charging and acquiring an information sequence based on the first signal.

17. The method according to claim 16, wherein a length of the information sequence is determined according to one of: being preset, or being configured via signaling.

18. The method according to claim 16, wherein the first signal is obtained by adding M units of high-level pulses and N units of low-level pulses to a second signal; wherein the second signal is a signal generated based on the information sequence and formed by a high-level pulse and a low-level pulse, different features of the second signal correspond to different information sequences, M is an integer greater than or equal to 1, N is an integer greater than or equal to 0, and M is greater than N.

19. The method according to claim 18, wherein a pulse width of a unit of high-level pulse and a pulse width of a unit of low-level pulse are determined according to one of: a preset pulse width value, or being configured via signaling.

20. The method according to claim 18, wherein the second signal is generated based on the information sequence through a preset waveform coding scheme or mapping scheme.

21. The method according to claim 18, wherein in the first signal, the M units of high-level pulses satisfy at least one of:
M₁ units of high-level pulses being located before a first pulse in the second signal;
M₂ units of high-level pulses being located after a last pulse in the second signal;
M₃ units of high-level pulses being located in the second signal;
wherein M₁, M₂, and M₃ are all integers less than or equal to M, and a sum of M₁, M₂, and M₃ is equal to M.

22. The method according to claim 18, wherein in the first signal, the N units of low-level pulses satisfy at least one of:
N₁ units of low-level pulses being located before a first pulse in the second signal;
N₂ units of low-level pulses being located after a last pulse in the second signal;
N₃ units of low-level pulses being located in the second signal;
wherein N₁, N₂, and N₃ are all integers less than or equal to N, and a sum of N₁, N₂, and N₃ is equal to N.

23. The method according to claim 18, wherein different features of the second signal correspond to different information sequences, comprising at least one of:
different lengths of the second signal correspond to different information sequences;
different combination orders of the high-level pulse and the low-level pulse in the second signal correspond to different information sequences;
different width combinations of the high-level pulse and/or the low-level pulse in the second signal correspond to different information sequences;
different widths of the high-level pulse and/or the low-level pulse in the second signal correspond to different values of a bit in the information sequence;
different width ratios between two consecutive high-level pulses in the second signal correspond to different values of a bit in the information sequence;
different width ratios between two consecutive low-level pulses in the second signal correspond to different values of a bit in the information sequence;
different width ratios between a high-level pulse and a low-level pulse that are consecutive in the second signal correspond to different values of a bit in the information sequence.

24. The method according to claim 18, wherein the high-level pulse and the low-level pulse in the second signal correspond to one or more modulation symbols with a same length and different amplitude values, and different amplitudes of the modulation symbols, or presence and absence of a data transmission on the modulation symbols represent the high-level pulse and the low-level pulse, respectively.

25. The method according to claim 16, wherein the first signal is generated from a second bit sequence obtained by adding P bits to a first bit sequence; wherein the first bit sequence is generated based on the information sequence, and P is a positive integer.

26. The method according to claim 25, wherein the first bit sequence is generated based on the information sequence through a preset coding scheme or mapping scheme.

27. The method according to claim 25, wherein the first signal is generated based on the second bit sequence through a preset waveform coding scheme or mapping scheme.

28. The method according to claim 25, wherein in the second bit sequence, the P bits satisfy at least one of:
P₁ bits being located before the first bit sequence;
P₂ bits being located after the first bit sequence;
P₃ bits being located in the first bit sequence;
wherein P₁, P₂, and P₃ are all integers less than or equal to P, and a sum of P₁, P₂, and P₃ is equal to P.

29. The method according to claim 25, wherein different features of the first signal correspond to different second bit sequences, comprising at least one of:
different lengths of the first signal correspond to different second bit sequences;
different combination orders of the high-level pulse and the low-level pulse in the first signal correspond to different second bit sequences;
different width combinations of the high-level pulse and the low-level pulse in the first signal correspond to different second bit sequences;
different widths of the high-level pulse and the low-level pulse in the first signal correspond to different values of a bit in the second bit sequence;
different width ratios between two consecutive high-level pulses in the first signal correspond to different values of a bit in the second bit sequence;
different width ratios between two consecutive low-level pulses in the first signal correspond to different values of a bit in the second bit sequence;
different width ratios between a high-level pulse and a low-level pulse that are consecutive in the first signal correspond to different values of a bit in the second bit sequence.

30. The method according to claim 16, wherein the high-level pulse and low-level pulse in the first signal correspond to one or more modulation symbols with a same length and different amplitude values, and different amplitudes of the modulation symbols, or presence and absence of a data transmission on the modulation symbols represent the high-level pulse and the low-level pulse, respectively.

31. A communication apparatus, comprising: a memory and a processor; wherein the memory and the processor are coupled; the memory is configured to store instructions executable by the processor; and the processor, upon executing the instructions, performs the method according to any one of claims 1 to 30.

32. A computer-readable storage medium, wherein computer instructions are stored on the computer-readable storage medium, and when the computer instructions are run on a communication apparatus, the communication apparatus performs the method according to any one of claims 1 to 30.
